# EUROPEAN PATENT SPECIFICATION

(11) **EP 4 057 700 B1**
(45) Date of publication and mention of the grant of the patent: **31.01.2024**
(21) Application number: 21217888.3
(22) Date of filing: 23.11.2016
(51) Int. Cl.: H04W 48/10

(54) **MULTIUSER ACCESS METHOD AND APPARATUS**
MEHRBENUTZERZUGRIFFSVERFAHREN UND -VORRICHTUNG
PROCÉDÉ ET APPAREIL D'ACCÈS MULTI-UTILISATEUR

(30) Priority: 31.12.2015 CN 201511033337
(43) Date of publication of application: 14.09.2022
(62) Divisional of application: 16880821.0
(73) Proprietor: Huawei Technologies Co., Ltd., Longgang District Shenzhen, Guangdong 518129 (CN)
(72) Inventor: LI, Yanchun, Shenzhen, 518129 (CN); HAN, Xiao, Shenzhen, 518129 (CN); LI, Yunbo, Shenzhen, 518129 (CN)
(74) Representative: Pfenning, Meinig & Partner mbB

(56) References cited:
- US-A1- 2013 286 959
- US-A1- 2015 117 368
- US-A1- 2015 124 722
- US-A1- 2015 222 346

## Description

### TECHNICAL FIELD

The present invention relates to the field of wireless communications, and in particular, to a multiuser access method and apparatus.

### BACKGROUND

In an uplink multi-user orthogonal frequency division multiple access (Orthogonal Frequency Division Multiple Access, OFDMA) random access process, to ensure that signals from a plurality of users are aligned when the signals arrive at an access point (Access Point, AP), the access point needs to send a trigger frame. After receiving the trigger frame, a user station (Station, STA) determines, based on an actual situation, whether to send an uplink access signal in an agreed inter-frame time interval. When a plurality of STAs perform uplink access, due to lack of coordination between the STAs, the STAs may use a same resource for uplink sending, and consequently signals of the STAs interfere with each other and a conflict is caused, and the STAs fail to perform access.
US 2015/117368 A1 discusses methods and apparatus for multiple user uplink. In one aspect, method for wireless communication includes receiving an assignment of a frequency bandwidth for an uplink transmission of a station. The method further includes determining whether a portion of the assigned frequency bandwidth is unavailable for the uplink transmission. The method further includes selectively transmitting the uplink transmission based on whether the portion of the assigned frequency bandwidth is unavailable.
US 2015/222346 A1 discusses a method for improving multiple-user (MU) multiple-input-multiple-output (MIMO) protocol efficiency includes transmitting an MU frame to multiple devices. The MU frame is beamformed to enable a corresponding one of the devices to receive an intended stream at high power. The MU frame includes an additional sounding-field. Acknowledgement (ACK) responses are received from at least some of the plurality of devices. Each of the ACK responses includes a sounding response frame including a channel feedback.
US 2013/286959 A1 discusses a method and apparatus to support coordinated orthogonal block-based resource allocation (COBRA) operations. An access point (AP) may be configured to indicate to a plurality of stations (STA)s that it may support COBRA. Each WTRU may be configured to indicate to the AP that it can support COBRA as well. The AP may be configured to transmit a COBRA controller information element (IE) comprising a plurality of fields to each of the WTRUs. Each WTRU may be configured to transmit a COBRA controllee IE comprising a plurality of fields. STA grouping management, group maintenance, channel access, beamforming, sounding and frequency and synchronization procedures are also described.
US 2015/124722 A1 relates to a wireless communication system, and more specifically, discloses are a method and an apparatus for accessing a channel in a WLAN system. The method for accessing a channel from a station (STA) in a wireless communication system comprises the steps of: receiving from an access point (AP) a first frame including a traffic indication map (TIM) and a restricted access window (RAW) parameter set component; determining a RAW in which channel access of the STA is permitted, on the basis of the RAW parameter set (RPS) component; and transmitting a second frame to the AP from within the RAW that is determined, wherein the RPS component includes at least one RAW indication field, each of the at least one RAW allocation fields further includes information related to transmitting a third frame, which includes information on slot allocation, and wherein the third frame can be received by the STA from the AP at a specific time/location in accordance with the information related to transmitting the third frame.

### SUMMARY

An objective of the present invention is to provide a multiuser access method and apparatus, so as to resolve a problem that because a plurality of STAs use a same resource to perform uplink access due to lack of coordination between the STAs, signals interfere with each other and the STAs fail to perform access.

The objective of the present invention is achieved by the subject-matter of the independent claims.

Further embodiments of the invention are according to the dependent claims. The following technical solutions do not fall under the scope of the claims and are presented for a better understanding of the invention:

According to a first aspect, a multiuser access method is provided, including:
broadcasting, by an AP, a first trigger frame to a STA within coverage of the AP, where the first trigger frame carries a preset condition, to request a STA that meets the preset condition to send an uplink access signal in a specified time after receiving the first trigger frame;
receiving, by the AP, an uplink access signal sent by at least one STA, where the uplink access signal includes an identifier sequence; and
when the AP determines that an identifier sequence included in a received uplink access signal is the same as an identifier sequence included in a resource group allocated by the AP to a STA that sends the uplink access signal, determining, by the AP, that the STA that sends the uplink access signal meets the preset condition.

With reference to the first aspect, in a first possible implementation of the first aspect, the determining, by the AP, that an identifier sequence included in a received uplink access signal is the same as an identifier sequence included in a resource group allocated by the AP to a STA that sends the uplink access signal includes:
determining, by the AP, that the received uplink access signal includes an LTF signal generated by a long training field LTF sequence or an LTF signal generated by an LTF that is repeated for a preset quantity of times; and
determining, by the AP, that an LTF used for the LTF signal included in the uplink access signal is the same as an LTF included in the resource group allocated by the AP to the STA that sends the uplink access signal.

With reference to the first aspect or the first possible implementation, in a second possible implementation of the first aspect, before the determining, by the AP, that the STA that sends the uplink access signal meets the preset condition, the method further includes:
determining, by the AP, that a subchannel used for receiving the uplink access signal is the same as a subchannel included in the resource group allocated by the AP to the STA that sends the uplink access signal.

With reference to the first aspect, in a third possible implementation of the first aspect, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

With reference to any one of the first aspect or the foregoing possible implementations, in a fourth possible implementation of the first aspect, before the broadcasting, by an AP, a first trigger frame to a STA within coverage of the AP, the method further includes:
grouping, by the AP, at least two STAs within the coverage of the AP, recording a group identifier of each STA after grouping, and notifying the corresponding STA of the group identifier of each STA;
that the AP broadcasts the first trigger frame to at least one STA within the coverage of the AP includes:
   broadcasting, by the AP to the STA within the coverage of the AP, a first trigger frame that carries a first group identifier; and
   the receiving, by the AP, an uplink access signal sent by at least one STA includes:
      receiving, by the AP, an uplink access signal sent by a STA that has the first group identifier.

With reference to any one of the first aspect or the foregoing possible implementations, in a fifth possible implementation of the first aspect, the allocating, by the AP, the resource group to the STA includes:
allocating, by the AP, at least one resource group to the STA, to associate with the STA.

With reference to the first aspect or the first possible implementation, in a sixth possible implementation of the first aspect, the allocating, by the AP, the resource group to the STA includes:
allocating, by the AP, an association ID to the STA, to associate with the STA; and
agreeing, by the AP, with the STA on a preset first operation rule, to perform an operation on the allocated association ID, so as to obtain the identifier sequence included in the resource group allocated to the STA.

With reference to the first aspect or the sixth possible implementation, in a seventh possible implementation of the first aspect, after the allocating, by the AP, an association ID to the STA, the method further includes:
agreeing, by the AP, with the STA on a preset second operation rule, to perform an operation on the allocated association ID, so as to obtain a subchannel included in the resource group allocated to the STA.

With reference to the first aspect, the first possible implementation, or the second possible implementation, in an eighth possible implementation of the first aspect, the allocating, by the AP, the resource group to the STA includes:
adding, by the AP to the broadcast first trigger frame, a STA ID separately corresponding to at least one STA within the coverage of the AP, and a resource group allocated to a STA corresponding to each STAID; or
broadcasting, by the AP, a management frame or a control frame before broadcasting the first trigger frame, where the management frame or the control frame carries a STA ID separately corresponding to at least one STA within the coverage of the AP, and a resource group allocated to a STA corresponding to each STAID.

With reference to the first aspect, the first possible implementation, or the second possible implementation, in a ninth possible implementation of the first aspect, the allocating, by the AP, the resource group to the STA includes:
adding, by the AP, an allocation bitmap to the broadcast first trigger frame, or broadcasting, by the AP, a management frame or a control frame before broadcasting the first trigger frame, where the management frame or the control frame carries an allocation bitmap; where
the allocation bitmap includes N bits and a STA ID of a start STA of a STA to which a resource group is to be allocated, the N bits are respectively corresponding to N different STAs, a STA ID of a STA corresponding to an i^{th} bit is the STA ID of the start STA plus i minus 1, and when a status of the i^{th} bit is 1, it indicates that a resource group is allocated to the STA corresponding to the i^{th} bit, where the allocated resource group is determined in the following manner: calculating a total quantity of 1s from a first bit to the i^{th} bit, and determining, based on a preset correspondence between a total quantity of 1s and a resource group, a resource group corresponding to the total quantity of 1s from the first bit to the i^{th} bit.

With reference to the first aspect or the first possible implementation, in a tenth possible implementation of the first aspect, the allocating, by the AP, the resource group to the STA includes:
adding, by the AP, LTF duration or a symbol quantity value to the broadcast first trigger frame; or
broadcasting, by the AP, a management frame or a control frame before broadcasting the first trigger frame, where the management frame or the control frame carries LTF duration or a symbol quantity value.

With reference to the first possible implementation, in an eleventh possible implementation of the first aspect, the determining, by the AP, an LTF used for the LTF signal included in the received uplink access signal includes:
performing, by the AP, channel estimation on a subchannel used for receiving the uplink access signal, to obtain a power value of the uplink access signal;
if the AP determines that the power value is greater than a preset threshold, determining that the uplink access signal received by using the subchannel includes the LTF signal generated by the LTF; and
detecting, by the AP, each LTF in a preset LTF set, and determining the LTF used to generate the LTF signal in the uplink access signal; where
the preset threshold is determined by noise power measured before the AP receives the uplink access signal sent by the at least one STA or is determined by a sum of the noise power and interference power, or is determined by noise power obtained by the AP based on a preset resource group or is determined by a sum of the noise power and interference power.

With reference to the first aspect, the first possible implementation, or the second possible implementation, in a twelfth possible implementation of the first aspect, before the determining, by the AP, that the STA that sends the uplink access signal meets the preset condition, the method further includes:
broadcasting, by the AP, an acknowledgment frame, where the acknowledgment frame includes acknowledgment indication information of all STAs that meet the preset condition; where
the acknowledgment indication information includes at least one of the following cases:
   IDs of all the STAs that meet the preset condition, or
   resource group indexes of resource groups separately used by all the STAs that meet the preset condition.

With reference to the first aspect, the first possible implementation, or the second possible implementation, in a thirteenth possible implementation of the first aspect, the acknowledgment indication information further includes an acknowledgment bitmap; and
the acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition; or
the acknowledgment bitmap includes M bits and a STA ID of a start STA of a to-be-acknowledged STA, the M bits are respectively corresponding to M different STAs, an ID of a STA corresponding to an i^{th} bit is the STA ID of the start STA plus i minus 1, and when a status of the i^{th} bit is 1, it indicates that the STA corresponding to the i^{th} bit meets the preset condition.

With reference to the thirteenth possible implementation, in a fourteenth possible implementation of the first aspect, the acknowledgment frame further carries a new resource group that is separately reallocated to at least one of the STA that meets the preset condition.

With reference to the first aspect, in a fifteenth possible implementation of the first aspect, after the determining, by the AP, that the STA that sends the uplink access signal meets the preset condition, the method further includes:
if the AP determines that load of at least one of the STA that meets the preset condition fails to be received, reallocating, based on a broadcast second trigger frame, a new resource group to the STA whose load fails to be received.

According to a second aspect, a multiuser access method is provided, including:
receiving, by a first STA, a first trigger frame broadcast by an AP, where the first trigger frame carries a preset condition, to request a STA that meets the preset condition to send an uplink access signal in a specified time after receiving the first trigger frame; and
when determining that the first STA meets the preset condition, sending, by the first STA, an uplink access signal to the AP by using a resource group allocated by the AP to the first STA, where the uplink access signal includes an identifier sequence.

With reference to the second aspect, in a first possible implementation of the second aspect, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

With reference to the second aspect or the first possible implementation, in a second possible implementation of the second aspect, before the receiving, by a first STA, a first trigger frame broadcast by an AP, the method further includes:
receiving, by the first STA, a group identifier that is notified by the AP and that is of a group in which the first STA is located;
the receiving, by a first STA, a first trigger frame broadcast by an AP includes:
   receiving, by the first STA, a first trigger frame that is broadcast by the AP and that carries a group identifier; and
   before the sending, by the first STA, an uplink access signal to the AP, the method includes:
      determining, by the first STA, that the group identifier carried in the first trigger frame is the same as the group identifier of the group in which the first trigger frame is located.

With reference to any one of the second aspect or the foregoing possible implementations, in a third possible implementation of the second aspect, that the first STA obtains the resource group allocated by the AP to the first STA includes:
obtaining, by the first STA, at least one resource group allocated by the AP to the first STA, to associate with the AP

With reference to the second aspect, the first possible implementation, or the second possible implementation, in a fourth possible implementation of the second aspect, that the first STA obtains the resource group allocated by the AP to the first STA includes:
obtaining, by the first STA, an association ID allocated by the AP to the first STA, to associate with the AP; and
agreeing, by the first STA, with the AP on a preset first operation rule, to perform an operation on the association ID, so as to obtain an identifier sequence included in the resource group allocated to the first STA.

With reference to the fourth possible implementation of the second aspect, in a fifth possible implementation of the second aspect, after the obtaining, by the first STA, an association ID allocated by the AP to the first STA, the method further includes:
agreeing, by the first STA, with the AP on a preset second operation rule, to perform an operation on the association ID, so as to obtain a subchannel included in the resource group allocated to the first STA.

With reference to the second aspect, the first possible implementation, or the second possible implementation, in a sixth possible implementation of the second aspect, that the first STA obtains the resource group allocated by the AP to the first STA includes:
receiving, by the first STA, the first trigger frame broadcast by the AP, where the first trigger frame carries a STA ID of the first STA and the resource group allocated to the first STA, and obtaining, by the first STA based on the first trigger frame, the resource group allocated to the first STA; or
before receiving the first trigger frame broadcast by the AP, receiving, by the first STA, a management frame or a control frame broadcast by the AP, where the management frame or the control frame carries a STA ID of the first STA and the resource group allocated to the first STA, and obtaining, by the first STA based on the management frame or the control frame, the resource group allocated to the first STA.

With reference to the second aspect, the first possible implementation, or the second possible implementation, in a seventh possible implementation of the second aspect, that the first STA obtains the resource group allocated by the AP to the first STA includes:
receiving, by the first STA, the first trigger frame broadcast by the AP, where the first trigger frame carries an allocation bitmap, or before receiving the first trigger frame broadcast by the AP, receiving, by the first STA, a management frame or a control frame broadcast by the AP, where the management frame or the control frame carries an allocation bitmap;
determining, by the first STA based on the allocation bitmap, a bit corresponding to the first STA; and
when determining that the bit corresponding to the first STA is 1, calculating, by the first STA, a total quantity of 1s from a first bit to the bit corresponding to the first STA, and determining, based on a preset correspondence between a total quantity of 1s and a resource group, a resource group corresponding to the total quantity of 1s from the first bit to the bit corresponding to the first STA, where
the allocation bitmap includes N bits and a STA ID of a start STA of a STA to which a resource group is to be allocated, the N bits are respectively corresponding to N different STAs, an ID of a STA corresponding to an i^{th} bit is the identity ID of the start STA plus i minus 1, and when a status of the i^{th} bit is 1, it indicates that a resource group is allocated to the STA corresponding to the i^{th} bit, where the allocated resource group is determined in the following manner: calculating a total quantity of 1s from the first bit to the i^{th} bit, and determining, based on the preset correspondence between a total quantity of 1s and a resource group, a resource group corresponding to the total quantity of 1s from the first bit to the i^{th} bit.

With reference to the second aspect, the first possible implementation, or the second possible implementation, in an eighth possible implementation of the second aspect, that the first STA obtains the resource group allocated by the AP to the first STA includes:
receiving, by the first STA, the first trigger frame broadcast by the AP, where the first trigger frame carries LTF duration or a symbol quantity value, or before receiving the first trigger frame broadcast by the AP, receiving, by the first STA, a management frame or a control frame broadcast by the AP, where the management frame or the control frame carries LTF duration or a symbol quantity value; and
determining, by the first STA based on the LTF duration or the symbol quantity value, the resource group allocated by the AP to the first STA.

With reference to the second aspect, the first possible implementation, or the second possible implementation, in a ninth possible implementation of the second aspect, after the sending, by the first STA, an uplink access signal to the AP, the method further includes:
receiving, by the first STA, an acknowledgment frame broadcast by the AP, where the acknowledgment frame includes acknowledgment indication information of all STAs that meet the preset condition; and
acknowledging, by the first STA based on the acknowledgment frame, that the uplink access signal is successfully sent.

With reference to the ninth possible implementation of the second aspect, in a tenth possible implementation of the second aspect, the acknowledging, by the first STA based on the acknowledgment frame, that the uplink access signal is successfully sent includes:
if the acknowledgment indication information includes IDs of all the STAs that meet the preset condition, and the first STA determines that the acknowledgment indication information includes a STA ID of the first STA, acknowledging that the uplink access signal is successfully sent; and/or
if the acknowledgment indication information includes resource group indexes of resource groups used by all the STAs that meet the preset condition, and the first STA determines that the acknowledgment indication message includes a resource group index of a resource group used by the first STA, acknowledging that the uplink access signal is successfully sent.

With reference to the ninth possible implementation of the second aspect, in an eleventh possible implementation of the second aspect, the acknowledging, by the first STA based on the acknowledgment frame, that the uplink access signal is successfully sent includes:
if the acknowledgment indication information includes an acknowledgment bitmap, determining, by the first STA, a bit, in the acknowledgment bitmap, corresponding to a resource group index of a resource group used by the first STA, and if it is determined that a status of the bit is 1, acknowledging that the uplink access signal is successfully sent; or
if the acknowledgment indication information includes an acknowledgment bitmap, determining, by the first STA, a bit, in the acknowledgment bitmap, corresponding to a STA ID of the first STA, and if it is determined that a status of the bit is 1, acknowledging that the uplink access signal is successfully sent; where
the acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition; or
the acknowledgment bitmap includes M bits and a start STA ID of a to-be-acknowledged STA, the M bits are respectively corresponding to M different STAs, an ID of a STA corresponding to an i^{th} bit is the start STA ID plus i minus 1, and when a status of the i^{th} bit is 1, it indicates that the STA corresponding to the i^{th} bit meets the preset condition.

With reference to the ninth possible implementation of the second aspect, in a twelfth possible implementation of the second aspect, the receiving, by the first STA, an acknowledgment frame broadcast by the AP further includes:
receiving, by the first STA, the acknowledgment frame broadcast by the AP, where the acknowledgment frame further carries a new resource group reallocated to the first STA.

With reference to the second aspect, in a thirteenth possible implementation of the second aspect, after the receiving, by the first STA, an acknowledgment frame broadcast by the AP, the method further includes:
receiving, by the first STA, a second trigger frame broadcast by the AP, where the second trigger frame further carries a new resource group reallocated to the first STA.

According to a third aspect, a multiuser access apparatus is provided, including:
a first sending unit, configured to broadcast a first trigger frame to a station STA within coverage of the apparatus, where the first trigger frame carries a preset condition, to request a STA that meets the preset condition to send an uplink access signal in a specified time after receiving the first trigger frame;
a first receiving unit, configured to receive an uplink access signal sent by at least one STA, where the uplink access signal includes an identifier sequence; and
a first processing unit, configured to: when it is determined that an identifier sequence included in a received uplink access signal is the same as an identifier sequence included in a resource group allocated to a STA that sends the uplink access signal, determine that the STA that sends the uplink access signal meets the preset condition.

With reference to the third aspect, in a first possible implementation of the third aspect, when it is determined that the identifier sequence included in the received uplink access signal is the same as the identifier sequence included in the resource group allocated to the STA that sends the uplink access signal, the first processing unit is specifically configured to:
determine that the received uplink access signal includes an LTF signal generated by a long training field LTF sequence or an LTF signal generated by an LTF that is repeated for a preset quantity of times; and
determine that an LTF used for the LTF signal included in the uplink access signal is the same as an LTF included in the resource group allocated to the STA that sends the uplink access signal.

With reference to the third aspect or the first possible implementation, in a second possible implementation of the third aspect, the first processing unit is further configured to: before determining that the STA that sends the uplink access signal meets the preset condition, determine that a subchannel used for receiving the uplink access signal is the same as a subchannel included in the resource group allocated to the STA that sends the uplink access signal.

With reference to the third aspect, in a third possible implementation of the third aspect, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

With reference to any one of the third aspect or the foregoing possible implementations, in a fourth possible implementation of the third aspect, the first processing unit is further configured to: before the AP broadcasts the first trigger frame to the STA within the coverage of the AP, group at least two STAs within the coverage of the AP, record a group identifier of each STA after grouping, and notify the corresponding STA of the group identifier of each STA;
when broadcasting the first trigger frame to at least one STA within the coverage of the apparatus, the first sending unit is specifically configured to:
broadcast, to the STA within the coverage of the AP, a first trigger frame that carries a first group identifier; and
when receiving the uplink access signal sent by the at least one STA, the first receiving unit is specifically configured to:
   receive an uplink access signal sent by a STA that has the first group identifier.

With reference to any one of the third aspect or the foregoing possible implementations, in a fifth possible implementation of the third aspect, the first processing unit is further configured to: when the resource group is allocated to the STA, allocate at least one resource group to the STA, to associate with the STA.

With reference to the third aspect or the first possible implementation, in a sixth possible implementation of the third aspect, the first processing unit is further configured to: when the resource group is allocated to the STA, allocate an association ID to the STA, to associate with the STA; and
agree with the STA on a preset first operation rule, to perform an operation on the allocated association ID, so as to obtain the identifier sequence included in the resource group allocated to the STA.

With reference to the third aspect or the sixth possible implementation, in a seventh possible implementation of the third aspect, the first processing unit is further configured to: after allocating the association ID to the STA, agree with the STA on a preset second operation rule, to perform an operation on the allocated association ID, so as to obtain a subchannel included in the resource group allocated to the STA.

With reference to the third aspect, the first possible implementation, or the second possible implementation, in an eighth possible implementation of the third aspect, the first sending unit is further configured to:
add, to the broadcast first trigger frame, a STA ID corresponding to at least one STA within the coverage of the AP, and a resource group allocated to a STA corresponding to each STA ID; or
broadcast a management frame or a control frame before broadcasting the first trigger frame, where the management frame or the control frame carries a STA ID separately corresponding to at least one STA within the coverage of the AP, and a resource group allocated to a STA corresponding to each STA ID.

With reference to the third aspect, the first possible implementation, or the second possible implementation, in a ninth possible implementation of the third aspect, the first sending unit is further configured to: add an allocation bitmap to the broadcast first trigger frame, or broadcast a management frame or a control frame before the AP broadcasts the first trigger frame, where the management frame or the control frame carries an allocation bitmap; where
the allocation bitmap includes N bits and a STA ID of a start STA of a STA to which a resource group is to be allocated, the N bits are respectively corresponding to N different STAs, a STA ID of a STA corresponding to an i^{th} bit is the STA ID of the start STA plus i minus 1, and when a status of the i^{th} bit is 1, it indicates that a resource group is allocated to the STA corresponding to the i^{th} bit, where the allocated resource group is determined in the following manner: calculating a total quantity of 1 s from a first bit to the i^{th} bit, and determining, based on a preset correspondence between a total quantity of 1s and a resource group, a resource group corresponding to the total quantity of 1s from the first bit to the i^{th} bit.

With reference to the third aspect or the first possible implementation, in a tenth possible implementation of the third aspect, the first sending unit is further configured to:
add LTF duration or a symbol quantity value to the broadcast first trigger frame; or
broadcast a management frame or a control frame before broadcasting the first trigger frame, where the management frame or the control frame carries LTF duration or a symbol quantity value.

With reference to the first possible implementation, in an eleventh possible implementation of the third aspect, when determining the LTF used for the LTF signal included in the received uplink access signal, the first processing unit is specifically configured to:
perform channel estimation on a subchannel used for receiving the uplink access signal, to obtain a power value of the uplink access signal;
if it is determined that the power value is greater than a preset threshold, determine that the uplink access signal received by using the subchannel includes the LTF signal generated by the LTF; and
detect each LTF in a preset LTF set, and determine the LTF used to generate the LTF signal in the uplink access signal; where
the preset threshold is determined by noise power measured before the AP receives the uplink access signal sent by the at least one STA or is determined by a sum of the noise power and interference power, or is determined by noise power obtained by the AP based on a preset resource group or is determined by a sum of the noise power and interference power.

With reference to the third aspect, the first possible implementation, or the second possible implementation, in a twelfth possible implementation of the third aspect, the first sending unit is further configured to broadcast an acknowledgment frame after it is determined that the STA that sends the uplink access signal meets the preset condition, where the acknowledgment frame includes acknowledgment indication information of all STAs that meet the preset condition; and
the acknowledgment indication information includes at least one of the following cases:
IDs of all the STAs that meet the preset condition, or
resource group indexes of resource groups separately used by all the STAs that meet the preset condition.

With reference to the third aspect, the first possible implementation, or the second possible implementation, in a thirteenth possible implementation of the third aspect, the acknowledgment indication information further includes an acknowledgment bitmap; and
the acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition; or
the acknowledgment bitmap includes M bits and a STA ID of a start STA of a to-be-acknowledged STA, the M bits are respectively corresponding to M different STAs, an ID of a STA corresponding to an i^{th} bit is the STA ID of the start STA plus i minus 1, and when a status of the i^{th} bit is 1, it indicates that the STA corresponding to the i^{th} bit meets the preset condition.

With reference to the thirteenth possible implementation, in a fourteenth possible implementation of the third aspect, the acknowledgment frame further carries a new resource group that is separately reallocated to at least one of the STA that meets the preset condition.

With reference to the third aspect, in a fifteenth possible implementation of the third aspect, the first processing unit is further configured to: after the AP determines that the STA that sends the uplink access signal meets the preset condition, if it is determined that load of at least one of the STA that meets the preset condition fails to be received, reallocate, based on a broadcast second trigger frame, a new resource group to the STA whose load fails to be received.

According to a fourth aspect, a multiuser access apparatus is provided, including:
a second receiving unit, configured to receive a first trigger frame broadcast by an AP, where the first trigger frame carries a preset condition, to request a STA that meets the preset condition to send an uplink access signal in a specified time after receiving the first trigger frame;
a second processing unit, configured to determine that the apparatus meets the preset condition; and
a second sending unit, configured to send an uplink access signal to the AP by using a resource group allocated by the AP to the apparatus, where the uplink access signal includes an identifier sequence.

With reference to the fourth aspect, in a first possible implementation of the fourth aspect, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

With reference to the fourth aspect or the first possible implementation, in a second possible implementation of the fourth aspect, the second receiving unit is further configured to: before receiving the first trigger frame broadcast by the AP, receive a group identifier that is notified by the AP and that is of a group in which the apparatus is located;
when receiving the first trigger frame broadcast by the AP, the second receiving unit is specifically configured to:
receive a first trigger frame that is broadcast by the AP and that carries a group identifier; and
the second processing unit is further configured to: before sending the uplink access signal to the AP, determine that the group identifier carried in the first trigger frame is the same as the group identifier of the group in which the apparatus is located.

With reference to any one of the fourth aspect or the foregoing possible implementations, in a third possible implementation of the fourth aspect, the second processing unit is further configured to: obtain the resource group allocated by the AP to the apparatus, and obtain at least one resource group allocated by the AP to the apparatus, to associate with the AP.

With reference to the fourth aspect, the first possible implementation, or the second possible implementation, in a fourth possible implementation of the fourth aspect, the second processing unit is further configured to: when obtaining the resource group allocated by the AP to the apparatus, obtain an association ID allocated by the AP to the apparatus, to associate with the AP; and
agree with the AP on a preset first operation rule, to perform an operation on the association ID, so as to obtain an identifier sequence included in the resource group allocated to the apparatus.

With reference to the fourth possible implementation of the fourth aspect, in a fifth possible implementation of the fourth aspect, the second processing unit is further configured to: after obtaining the association ID allocated by the AP to the apparatus, agree with the AP on a preset second operation rule, to perform an operation on the association ID, so as to obtain a subchannel included in the resource group allocated to the apparatus.

With reference to the fourth aspect, the first possible implementation, or the second possible implementation, in a sixth possible implementation of the fourth aspect, the second receiving unit is further configured to:
receive the first trigger frame broadcast by the AP, where the first trigger frame carries a STA ID of the first STA and the resource group allocated to the first STA; and
the second processing unit is further configured to obtain, based on the first trigger frame, the resource group allocated to the apparatus; or
the second receiving unit is further configured to:
   before receiving the first trigger frame broadcast by the AP, receive a management frame or a control frame broadcast by the AP, where the management frame or the control frame carries the STA ID of the first STA and the resource group allocated to the first STA; and
   the second processing unit is further configured to obtain, based on the management frame or the control frame, the resource group allocated to the apparatus.

With reference to the fourth aspect, the first possible implementation, or the second possible implementation, in a seventh possible implementation of the fourth aspect, the second receiving unit is further configured to:
receive the first trigger frame broadcast by the AP, where the first trigger frame carries an allocation bitmap, or before the first STA receives the first trigger frame broadcast by the AP, receive a management frame or a control frame broadcast by the AP, where the management frame or the control frame carries an allocation bitmap;
the second processing unit is further configured to: determine, based on the allocation bitmap, a bit corresponding to the apparatus; and
when it is determined that the bit corresponding to the apparatus is 1, calculate a total quantity of 1s from a first bit to the bit corresponding to the first STA, and determine, based on a preset correspondence between a total quantity of 1s and a resource group, a resource group corresponding to the total quantity of 1s from the first bit to the bit corresponding to the first STA, where
the allocation bitmap includes N bits and a STA ID of a start STA of a STA to which a resource group is to be allocated, the N bits are respectively corresponding to N different STAs, an ID of a STA corresponding to an i^{th} bit is an identity ID of the start STA plus i minus 1, and when a status of the i^{th} bit is 1, it indicates that a resource group is allocated to the STA corresponding to the i^{th} bit, where the allocated resource group is determined in the following manner: calculating a total quantity of 1s from the first bit to the i^{th} bit, and determining, based on the preset correspondence between a total quantity of 1s and a resource group, a resource group corresponding to the total quantity of 1s from the first bit to the i^{th} bit.

With reference to the fourth aspect, the first possible implementation, or the second possible implementation, in an eighth possible implementation of the fourth aspect, the second receiving unit is further configured to: receive the first trigger frame broadcast by the AP, where the first trigger frame carries LTF duration or a symbol quantity value; or before the first STA receives the first trigger frame broadcast by the AP, receive a management frame or a control frame broadcast by the AP, where the management frame or the control frame carries LTF duration or a symbol quantity value; and
the second processing unit is further configured to determine, based on the LTF duration or the symbol quantity value, the resource group allocated by the AP to the apparatus.

With reference to the fourth aspect, the first possible implementation, or the second possible implementation, in a ninth possible implementation of the fourth aspect, the second receiving unit is further configured to: after the uplink access signal is sent to the AP, receive an acknowledgment frame broadcast by the AP, where the acknowledgment frame includes acknowledgment indication information of all STAs that meet the preset condition; and
the second processing unit is further configured to acknowledge, based on the acknowledgment frame, that the uplink access signal is successfully sent.

With reference to the ninth possible implementation of the fourth aspect, in a tenth possible implementation of the fourth aspect, when acknowledging, based on the acknowledgment frame, that the uplink access signal is successfully sent, the second processing unit is specifically configured to:
if the acknowledgment indication information includes IDs of all the STAs that meet the preset condition, and it is determined that the acknowledgment indication information includes a STA ID of the apparatus, acknowledge that the uplink access signal is successfully sent; and/or
if the acknowledgment indication information includes resource group indexes of resource groups used by all the STAs that meet the preset condition, and it is determined that the acknowledgment indication message includes a resource group index of a resource group used by the first STA, acknowledge that the uplink access signal is successfully sent.

With reference to the ninth possible implementation of the fourth aspect, in an eleventh possible implementation of the fourth aspect, when acknowledging, based on the acknowledgment frame, that the uplink access signal is successfully sent, the second processing unit is specifically configured to:
if the acknowledgment indication information includes an acknowledgment bitmap, determine a bit, in the acknowledgment bitmap, corresponding to a resource group index of a resource group used by the apparatus, and if it is determined that a status of the bit is 1, acknowledge that the uplink access signal is successfully sent; or
if the acknowledgment indication information includes an acknowledgment bitmap, determine a bit, in the acknowledgment bitmap, corresponding to a STA ID of the apparatus, and if it is determined that a status of the bit is 1, acknowledge that the uplink access signal is successfully sent; where
the acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition; or
the acknowledgment bitmap includes M bits and a start STA ID of a to-be-acknowledged STA, the M bits are respectively corresponding to M different STAs, an ID of a STA corresponding to an i^{th} bit is the start STA ID plus i minus 1, and when a status of the i^{th} bit is 1, it indicates that the STA corresponding to the i^{th} bit meets the preset condition.

With reference to the ninth possible implementation of the fourth aspect, in a twelfth possible implementation of the fourth aspect, when receiving the acknowledgment frame broadcast by the AP, the second receiving unit is specifically configured to:
receive the acknowledgment frame broadcast by the AP, where the acknowledgment frame further carries a new resource group reallocated to the first STA.

With reference to the fourth aspect, in a thirteenth possible implementation of the fourth aspect, the second receiving unit is further configured to: after receiving the acknowledgment frame broadcast by the AP, receive a second trigger frame broadcast by the AP, where the second trigger frame further carries a new resource group reallocated to the first STA.

The objective of the present invention is achieved by all the features defined in combination in the independent claims. In a non-claimed example the AP broadcasts the first trigger frame to the STA within the coverage of the AP, where the first trigger frame carries the preset condition, to request the STA that meets the preset condition to send the uplink access signal in the specified time after receiving the first trigger frame; the AP receives the uplink access signal sent by the at least one STA, where the uplink access signal includes the identifier sequence; and when determining that the identifier sequence included in the received uplink access signal is the same as the identifier sequence included in the resource group allocated by the AP to the STA that sends the uplink access signal, the AP determines that the STA that sends the uplink access signal meets the preset condition. The AP allocates a resource group to the STA in advance, the AP broadcasts a trigger frame that carries the preset condition, and when the AP determines that the STA sends an uplink access signal by using an identifier sequence in the resource group allocated in advance, the AP can identify the STA and determine that the STA meets the preset condition. Therefore, uplink resource use efficiency is effectively improved.

### BRIEF DESCRIPTION OF DRAWINGS

FIG. 1 is a schematic diagram of a network architecture according to an embodiment of the present invention;
FIG. 2 is an overview flowchart A of multiuser access according to an embodiment of the present invention;
FIG. 3 is an overview flowchart B of multiuser access according to an embodiment of the present invention;
FIG. 4 is a schematic diagram of an access process in a power saving mode-poll application scenario;
FIG. 5 is a schematic diagram of an access process in a buffer size report application scenario;
FIG. 6 is a schematic diagram of an access process in a channel status report application scenario;
FIG. 7 is a schematic structural diagram of a multiuser access apparatus 70;
FIG. 8 is a schematic structural diagram of a multiuser access apparatus 80;
FIG. 9 is a schematic structural diagram of an entity device of an access point; and
FIG. 10 is a schematic structural diagram of an entity device of a station.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention..

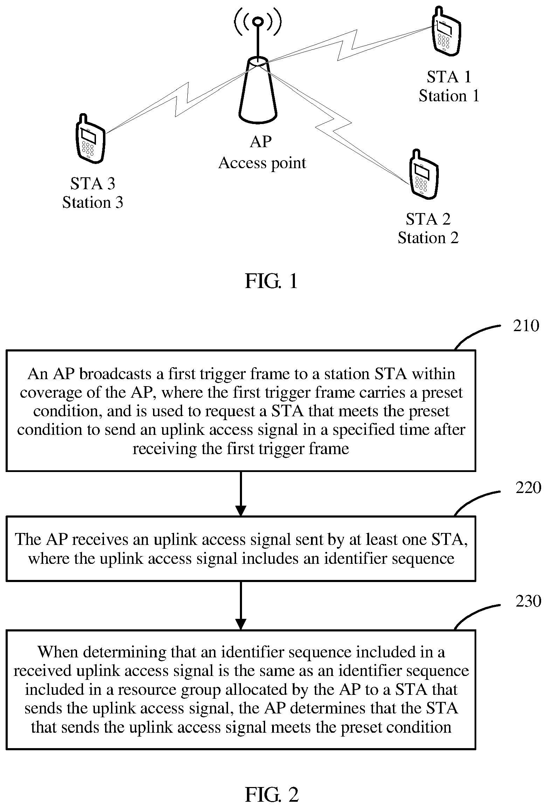

Referring to FIG. 1, FIG. 1 shows a specific application scenario in an embodiment of the present invention. FIG. 1 includes an AP and a plurality of STAs within coverage of the AP. The AP broadcasts a trigger frame, and a STA sends an uplink access signal in a specified time after receiving the trigger frame. The AP broadcasts an acknowledgment frame, to acknowledge a STA that successfully sends an uplink access signal.

The following describes preferred implementations of the present invention in detail.

Referring to FIG. 2, an embodiment of the present invention provides a multiuser access method. A specific process includes the following steps.

Step 210: An AP broadcasts a first trigger frame to a STA within coverage of the AP, where the first trigger frame carries a preset condition, to request a STA that meets the preset condition to send an uplink access signal in a specified time after receiving the first trigger frame.

The preset condition herein is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

Specifically, the AP may add a request to the first trigger frame, to request uplink access of a STA that switches from a sleep state to a non-sleep state, or add a request to the first trigger frame, to request uplink access of a STA that transmits the data of the specific access type.

Step 220: The AP receives an uplink access signal sent by at least one STA, where the uplink access signal includes an identifier sequence.

In a standard uplink access signal, an HE-LTF signal is used to provide channel estimation reference. The STA may choose whether to send a load signal after the HE-LTF signal. The AP receives the HE-LTF signal, and performs channel estimation based on the HE-LTF signal. The HE-LTF signal may be a row or a column in a P-matrix, or a row or a column in another orthogonal matrix, or may be another low-correlation sequence.

Therefore, the identifier sequence herein may be an LTF or an LTF that is repeated for a preset quantity of times.

Step 230: When determining that an identifier sequence included in a received uplink access signal is the same as an identifier sequence included in a resource group allocated by the AP to a STA that sends the uplink access signal, the AP determines that the STA that sends the uplink access signal meets the preset condition.

Specifically, the AP determines that the received uplink access signal includes an LTF signal generated by the LTF or an LTF signal generated by the LTF that is repeated for a preset quantity of times, and when determining that an LTF used for the LTF signal included in the uplink access signal is the same as an LTF included in the resource group allocated by the AP to the STA that sends the uplink access signal, the AP determines that the STA that sends the uplink access signal meets the preset condition.

A method used by the AP to determine the LTF used for the LTF signal included in the received uplink access signal may be but is not limited to the following:
performing, by the AP, channel estimation on a subchannel used for receiving the uplink access signal, to obtain a power value of the uplink access signal.

For example, the AP performs, based on the received HE-LTF signal, channel estimation on a subchannel that receives the signal, to obtain a channel coefficient h. The coefficient may be a complex number, for example, in a single-receive antenna case, or may be a vector, for example, in a multiple-receive antenna case. The AP may obtain the power value of the signal by performing a modulo operation on h and calculating a squared value, or performing another mathematical operation. The power value depends on a channel gain and signal transmit power of a transmitter (that is, the station).

Further, if the AP determines that the power value is greater than a preset threshold, the AP determines that the signal includes the LTF signal generated by the LTF.

Whether an HE-LTF is used on a corresponding subchannel may be determined by using the power value. Specifically, when the power value is higher than the specified threshold, the AP determines that the HE-LTF is used on the subchannel.

The preset threshold herein is determined by noise power measured before the AP receives the uplink access signal sent by the at least one STA or is determined by a sum of the noise power and interference power, or is determined by noise power obtained by the AP based on a preset resource group or is determined by a sum of the noise power and interference power. Further, the AP may control an access success rate, a false detection rate, or an undetection rate of the STA by adjusting the threshold. A preset resource group herein is a resource group remained after the resource group is allocated to the STA. The AP analyzes the uplink access signal based on an orthogonal property of the identifier sequence and the preset resource group , and obtains the noise power or the sum of the noise power and the interference power.

After the AP determines that the HE-LTF is used on the subchannel, the AP detects each LTF in a preset LTF set, and determines the LTF used for generating the LTF signal in the uplink access signal.

In addition, before determining that the STA that sends the uplink access signal meets the preset condition, the AP may further determine whether the subchannel used for receiving the uplink access signal is the same as a subchannel included in the resource group allocated by the AP to the STA that sends the uplink access signal, and if the subchannel used for receiving the uplink access signal is the same as the subchannel included in the resource group allocated by the AP to the STA that sends the uplink access signal, the AP determines that the STA that sends the uplink access signal meets the preset condition.

Before performing step 210, to multiplex the resource group, the AP may group at least two STAs within the coverage of the AP, record a group identifier of each STA after grouping, and notify the corresponding STA of the group identifier of each STA.

For example, the AP may group a STA 1, a STA 2, a STA 3, a STA 4, a STA 5, and a STA 6 into two groups. A group 1 includes the STA 1, the STA 3, and the STA 5, and a group 2 includes the STA 2, the STA 4, and the STA 6. The AP notifies the STA 1, the STA 3, and the STA 5 of a group identifier 1, and notifies the STA 2, the STA 4, and the STA 6 of a group identifier 2.

When broadcasting the first trigger frame to at least one STA within the coverage of the AP, the AP may add a first group identifier to the first trigger frame, and the AP receives an uplink access signal sent by the at least one STA. In this case, an STA that has the first group identifier and that meets the preset condition sends an uplink access signal to the AP.

For example, in the foregoing example, the AP groups the STA 1, the STA 3, and the STA 5 into a group 1, and notifies the three STAs of the group identifier 1. In this case, if the AP sends the first trigger frame, to request uplink access of a STA that switches from a sleep state to a non-sleep state and that is in the group with the group identifier 1, and if the STA 1 meets a condition of switching from a sleep state to a non-sleep state, and an identifier of a group in which the STA 1 is located is 1, the STA 1 sends an uplink access signal to the AP. In this case, only the STA whose group identifier is 1 and that meets the condition of switching from a sleep state to a non-sleep state sends an uplink access signal to the AP to respond to the first trigger frame of the AP.

In addition, STAs in different groups may use a same resource group, and the AP multiplexes the resource group by adding a group identifier to a trigger frame, to improve efficiency of allocating a resource group by the AP to the STA.

Before performing step 210, the AP needs to allocate the resource group to the STA.

Specifically, the AP may allocate a resource group to all STAs within the coverage of the AP, or may allocate a resource group to some STAs. For each STA to which a resource group is allocated, the AP may allocate one resource group or a plurality of resource groups to the STA, and the STA determines to select which resource group to send an uplink access signal or selects a resource group based on an instruction of the AP to send an uplink access signal. However, another STA to which no resource group is allocated still performs access through contention.

That the AP allocates the resource group to the STA may include but is not limited to the following cases:
In a first allocation manner, the AP allocates at least one resource group to the STA, to associate with the AP.

The resource group herein includes an identifier sequence, or an LTF, or an LTF and a subchannel.

When allocating the at least one resource group to the STA, the AP allocates an identifier sequence number, or an LTF number, or an LTF number and a subchannel number, or a resource group index of the at least one resource group to the STA.

For example, the AP may combine a subchannel and an LTF in advance to form a resource group, and each resource group corresponds to one resource group index.

Example 1: Each unit channel (for example, 20 MHz) has M subchannels and N LTFs in total, and a resource group index corresponding to an m^{th} subchannel (numbered from 1) and an n^{th} LTF (numbered from 1) is k=m+M*(n-1).

Example 2: Each unit channel (for example, 20 MHz) has M subchannels and N LTFs in total, and a resource group index corresponding to an m^{th} subchannel (numbered from 1) and an n^{th} HE-LTF sequence (numbered from 1) is k=n+N*(m-1).

In a second allocation manner, the AP allocates an association ID to the STA, to associate with the AP.

The association ID (Association ID) is an AID. The AP and the STA may map the AID of the STA to an LTF number and a subchannel number in a one-to-one manner based on a preset algorithm.

Specifically, the AP agrees with the STA on a preset first operation rule, to perform an operation on the allocated association ID, so as to obtain the identifier sequence included in the resource group allocated to the STA.

Further, the AP agrees with the STA on a preset second operation rule, to perform an operation on the allocated association ID, so as to obtain the subchannel included in the resource group allocated to the STA.

The two operation rules herein may be used separately, or may be used in combination.

Example 3: A preset base number is subtracted from an AID, for example, the base number may be 0, and then a value obtained by dividing the difference by a quantity of subchannels and rounding down is used as a number of an allocated LTF. If an LTF is numbered from 0, a result obtained by rounding down is directly used as the number of the allocated LTF. If an LTF is numbered from 1, a result obtained by rounding down plus 1 is used as the number of the allocated LTF.

A preset base number is subtracted from an AID, for example, the base number may be 0, and then the difference is divided by a quantity of subchannels, and an obtained remainder is used as the number of the allocated subchannel. If a subchannel is numbered from 0, the obtained remainder is directly used as the number of the allocated subchannel. If a subchannel is numbered from 1, the obtained remainder plus 1 is used as the number of the allocated subchannel.

It is assumed that an AID allocated by the AP to the STA 1 to associate with the STA 1 is 5. It is assumed that the preset base number is 0, the quantity of subchannels is 5, the LTF is numbered from 0, and the subchannel is numbered from 0. In this case, 5/5=1. It can be known that a number of an LTF allocated by the AP to the STA 1 is 1, a remainder is 0, and a number of a subchannel allocated by the AP to the STA 1 is 0.

Example 4: A preset base number is subtracted from an AID, for example, the base number may be 0, the difference is divided by a quantity of LTFs, and an obtained remainder is used as a number of an allocated LTF. If an LTF is numbered from 0, the obtained remainder is used as the number of the allocated LTF. If an LTF is numbered from 1, the obtained remainder plus 1 is used as the number of the allocated LTF.

A preset base number is subtracted from an AID. For example, the base number may be 0. The difference is divided by a quantity of LTFs, and a value obtained by rounding up is used as a number of an allocated subchannel. If a subchannel is numbered from 0, the result obtained by rounding up is directly used as the number of the allocated subchannel. If a subchannel is numbered from 1, the result obtained by rounding up plus 1 is used as the number of the allocated subchannel.

It is assumed that an AID allocated by the AP to the STA 2 to associate with the STA 2 is 6. It is assumed that the preset base number is 0, the quantity of LTFs is 8, the LTF is numbered from 1, and the subchannel is numbered from 1. In this case, 6/8=0.75, and a result obtained by rounding up is 1. It can be known that a number of a subchannel allocated by the AP to the STA 1 is 2, a remainder is 6, and a number of a subchannel allocated by the AP to the STA 1 is 7.

In both the first allocation manner and the second allocation manner, the AP explicitly (in the first allocation manner) or implicitly (in the second allocation manner) allocates the resource group to the STA, to associate with the station.

In a third allocation manner, the AP adds, to the broadcast first trigger frame, a STA ID separately corresponding to at least one STA within the coverage of the AP, and a resource group allocated to a STA corresponding to each STA ID.

In a fourth allocation manner, the AP broadcasts a management frame or a control frame before broadcasting the first trigger frame. The management frame or the control frame carries a STA ID separately corresponding to at least one STA within the coverage of the AP, and a resource group allocated to a STA corresponding to each STA ID.

A difference between the third allocation manner and the fourth allocation manner is that the AP allocates the resource group to the STA at different moments.

The STA ID herein may be a MAC address, an AID, a partial AID, an active station ID (Active STA ID), or a temporary number. The partial AID is a part of the AID, such as first four bits of the AID. The active STA ID is an ID allocated by the AP to an active station. After the active station switches to a dormant state, the AP does not use the ID to indicate the station. In addition, the AP may agree on one or more specific time periods in which it is valid to use the ID. The AP may further reclaim the ID from the STA, and after the ID is reclaimed, when the AP sends the ID again, the ID does not represent the station any longer. The temporary number may be a number of a station in a current frame or in a previous frame, for example, a j^{th} station that is indicated as true (there is data) in a traffic indication map (Traffic indication map, TIM). The indication map is used to indicate whether the station has response data.

For the third allocation manner and the fourth allocation manner, resource group allocation tables in Table 1, Table 2, and Table 3 may be used but are not limited. A generation rule and a parsing rule of each resource group allocation table are agreed on in advance, and a station within the coverage of the AP is notified of the parsing rule of each resource group allocation table.

Example 5: As shown in Table 1, a resource group allocation table may be carried in the first trigger frame or the control frame or the management frame, including a quantity of STAs (optional), STA IDs of N STAs, and a resource group index allocated to a start STA.

**Table 1**

| | | | | | |
|---|---|---|---|---|---|
| Quantity of STAs | Resource group index | STA 1 ID | STA 2 ID | ... | STA N ID |

The resource group index in Table 1 is a resource group index allocated by the AP to the STA 1, the STA 2 learns, based on the resource group index allocated by the AP to the STA 1, that a resource group index allocated by the AP to the STA 2 is the resource group index corresponding to the STA 1 plus 1, and a STA N learns that a resource group index allocated by the AP to the STA N is the resource group index corresponding to the STA 1 plus N minus 1.

Example 6: As shown in Table 2, a resource group allocation table may be carried in the first trigger frame or the control frame or the management frame, including a quantity of STAs, a start STA ID, and a resource group index allocated to a start STA.

**Table 2**

| | | |
|---|---|---|
| Quantity of STAs | Start STA ID | Resource group index |

In Table 2, a STA to which a resource group is allocated may be learned based on the start STA ID and the quantity of STAs, to be specific, resource groups are allocated to a STA corresponding to the start STA ID to a STA corresponding to the start STA ID+N-1. If the resource group index allocated to the start STA is s, a resource group index allocated to a STA corresponding to the start STA ID+1 is s+1, and a resource group index allocated to the STA corresponding to the start STA ID+N-1 is s+N-1.

Example 7: As shown in Table 3, a resource group allocation table may be carried in the first trigger frame or the control frame or the management frame, including a start STA ID, an end STA ID, and a resource group index allocated to the start STA ID.

**Table 3**

| | | |
|---|---|---|
| Start STA ID | End STA ID | Resource group index |

In Table 3, a STA to which a resource group is allocated may be learned based on the start STA ID and the end STA ID, to be specific, resource groups are allocated to a STA corresponding to the start STA ID to a STA corresponding to the end STA ID. If a resource group index allocated to a start STA is k, a resource group index allocated to a STA corresponding to the start STA ID+1 is k+1, and a resource group index allocated to the STA corresponding to the end STA ID is s+End STA ID-Start STA ID-1.

In a fifth allocation manner, the AP adds an allocation bitmap to the first trigger frame.

In a sixth allocation manner, the AP broadcasts a management frame or a control frame before broadcasting the first trigger frame, and the management frame or the control frame carries an allocation bitmap.

A difference between the fifth allocation manner and the sixth allocation manner is that the AP allocates the resource group the STA at different moments.

The allocation bitmap includes N bits and a STA ID of a start STA of a STA to which a resource group is to be allocated, the N bits are respectively corresponding to N different STAs, a STA ID of a STA corresponding to an i^{th} bit is the STA ID of the start STA plus i minus 1, and when a status of the i^{th} bit is 1, it indicates that a resource group is allocated to the STA corresponding to the i^{th} bit. The allocated resource group is determined in the following manner: calculating a total quantity of 1s from a first bit to the i^{th} bit, and determining, based on a preset correspondence between a total quantity of 1s and a resource group, a resource group corresponding to the total quantity of 1s from the first bit to the i^{th} bit.

The preset correspondence herein between a total quantity of 1s and a resource group may be: allocating a resource group in advance, numbering the resource group, and establishing a correspondence between the total quantity of 1s and a number of the resource group, for example, when the total quantity of 1s is 1, a corresponding resource group index is 1+t, t is an integer greater than or equal to 0, is a preset value, and is agreed on by the AP with the STA in advance. Alternatively, the total quantity of 1s is used as a similar "AID", and a one-to-one mapping relationship between each total quantity of 1s and each of an LTF number and a subchannel number is established by using an algorithm in Example 3 or Example 4.

**Table 4**

| | | | | | |
|---|---|---|---|---|---|
| Quantity of STAs (optional) | Start STA ID | Bit (1) | Bit (2) | ... | Bit (N) |

Example 8: As shown in Table 4, the start STA ID is corresponding to Bit (1), if a status of Bit (1) is 1, it indicates that a resource group is allocated to a start STA, and a STA corresponding to Bit (2) is a STA corresponding to the start STA ID+1, and if a status of Bit (2) is 0, it indicates that no resource group is allocated to a STA corresponding to the start STA ID+1. If a status of Bit (k) is 1, it indicates that a resource group is allocated to a STA corresponding to the start STA ID+K-1. It is assumed that the STA corresponding to the start STA ID+k-1 is the STA 5, and the STA 5 is a third station on which 1 occurs. Therefore, a total quantity of 1s is 3. If the preset correspondence between a total quantity of 1s and a resource group is that the total quantity of 1s is equal to a resource group index, it may be learned that a resource group index allocated to the STA is 3.

In a seventh allocation manner, the AP adds LTF duration or a symbol quantity value to the broadcast first trigger frame.

In an eighth allocation manner, the AP broadcasts a management frame or a control frame before broadcasting the first trigger frame, and the management frame or the control frame carries LTF duration or a symbol quantity value.

A difference between the seventh allocation manner and the eighth allocation manner is that the AP allocates the resource group to the STA at different moments.

The STA selects, based on the LTF duration or the symbol quantity value, an LTF that meets a condition as an optional identifier sequence.

Example 9: The AP and the STA correspond an LTF duration or a symbol quantity value to an LTF set such as a P matrix through protocol agreement or preliminary signaling interaction between the AP and the STA. When the first trigger frame, the management frame, or the control frame broadcast by the AP indicates the LTF duration or the LTF symbol quantity value, the station determines an identifier sequence from a corresponding LTF sequence set based on the LTF duration or the LTF symbol quantity value. For example, the LTF set is an N×N P matrix, and a specific row or column (whether a row or a column is used is specified in a protocol) in the P matrix is used as a selected identifier sequence based on the LTF duration or the LTF symbol quantity value.

The foregoing allocation manners of allocating, the resource group by the AP to the STA can effectively improve efficiency of allocating the resource group by the AP to the station, and therefore signaling overheads are reduced.

After step 230, the AP broadcasts an acknowledgment frame, and the acknowledgment frame includes acknowledgment indication information of all STAs that meet the preset condition.

The acknowledgment indication information may carry at least one piece of the following content as an acknowledgment table:
(1) IDs of all the STAs that meet the preset condition:

**Table 5**

| | | | | |
|---|---|---|---|---|
| Quantity of STAs (optional) | STA 1 ID | STA 2 ID | ... | STA_N ID |

(2) Resource group indexes of resource groups separately used by all the STAs that meet the preset condition:

**Table 6**

| | | | | |
|---|---|---|---|---|
| Quantity of STAs (optional) | Resource group index 1 | Resource group index 2 | ... | Resource group index n |

(3) An acknowledge bitmap that is not limited to the following two forms:
A first acknowledgment bitmap is a station acknowledgment bitmap, and includes M bits and a STA ID of a start STA of a to-be-acknowledged STA. The M bits are respectively corresponding to M different STAs, an ID of a STA corresponding to an i^{th} bit is the STA ID of the start STA plus i minus 1, and when a status of the i^{th} bit is 1, it indicates that the STA corresponding to the i^{th} bit meets the preset condition, as shown in Table 7.

**Table 7**

| | | | | | |
|---|---|---|---|---|---|
| Quantity of STAs (optional) | Start STA ID | Bit (1) | Bit (2) | ... | Bit (N) |

The STA 1 is used as an example. The STA 1 determines, based on Table 7, a bit corresponding to the STA 1. If a status of the bit is 1, it indicates that the STA 1 successfully sends an uplink access signal, and the STA 1 meets the preset condition.

A second acknowledgment bitmap is a resource group index acknowledgment bitmap, and includes a start resource group index and T bits. The T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition, as shown in Table 8.

**Table 8**

| | | | | | |
|---|---|---|---|---|---|
| Quantity of STAs (optional) | Start resource group index | Bit (1) | Bit (2) | ... | Bit (N) |

The STA 2 is used as an example. The STA 2 determines, based on Table 8, a bit corresponding to a resource group index of a resource group used by the STA 2. If a status of the bit is 1, it indicates that the STA 2 successfully sends an uplink access signal, and the STA 2 meets the preset condition.

In addition, the acknowledgment frame further carries a new resource group separately reallocated to at least one of the STA that meets the preset condition.

For example, the AP sends the first trigger frame, to request uplink access of a STA that needs to transmit uplink data. The STA 1 and the STA 2 need to transmit uplink data, and after receiving the trigger frame, use a same subchannel and different LTFs in a specified time to send uplink access signals. For example, the STA 1 and the STA 2 use a subchannel whose subchannel number is 1, but neither of the STA 1 and the STA 2 sends load. The AP successfully parses the two signals, and determines that both the two STAs need to transmit uplink data. To ensure transmission efficiency and successful load reception, the two STAs cannot transmit uplink data on a same subchannel. Therefore, the AP adds, to an acknowledgment frame, a resource group reallocated to the STA 2, for example, the STA 2 is enabled to send uplink data on a subchannel 3. When sending a second trigger frame, the AP instructs, in the second trigger frame, the STA acknowledged in the acknowledgment frame before to send uplink data. In this case, the STA 1 still uses an original resource group to send uplink data, and the STA 2 uses the newly allocated resource group to send uplink data. Optionally, the AP may separately allocate resource groups to the STA 1 and the STA 2 based on channel availability.

After step 230, if the AP determines that load of at least one of the STA that meets the preset condition fails to be received, the AP reallocates, based on the broadcast second trigger frame, a new resource group to the STA whose load fails to be received.

When sending the uplink access signal, the STA may choose whether to send load. If the AP parses the STA, and fails to receive the load, the AP may send the second trigger frame, and allocate a new resource group such as an idle channel to the STA whose load fails to be received, to ensure successful load reception.

In the foregoing example, the AP sends the first trigger frame, to request the uplink access of the STA that needs to transmit uplink data. The STA 1 and the STA 2 need to transmit uplink data, and after receiving the trigger frame, use a same subchannel and different LTFs in a specified time to send uplink access signals, and both the two STAs carry load. In this case, the AP may fail to receive the load. Therefore, the AP may send a trigger frame again, that is, the second trigger frame, and reallocate a resource group to a STA whose load fails to be received.

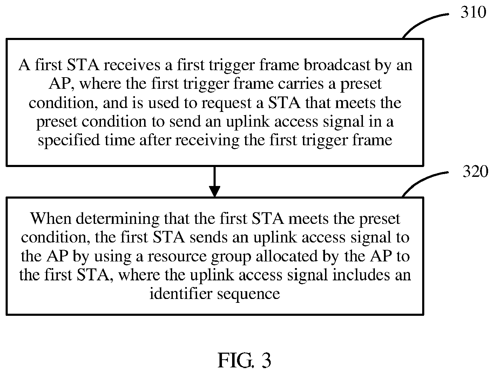

Referring to FIG. 3, an embodiment of the present invention provides a multiuser access method. A specific process includes the following steps.

Step 310: A first STA receives a first trigger frame broadcast by an AP, where the first trigger frame carries a preset condition, to request a STA that meets the preset condition to send an uplink access signal in a specified time after receiving the first trigger frame.

Step 320: When determining that the first STA meets the preset condition, the first STA sends an uplink access signal to the AP by using a resource group allocated by the AP to the first STA, where the uplink access signal includes an identifier sequence.

Specifically, the first STA sends the uplink access signal in the specified time after receiving the first trigger frame.

Further, the first STA may determine a used resource group and a quantity of sent uplink access signals based on the first trigger frame. For example, the preset condition carried in the first trigger frame is that a specific channel status is available or unavailable. In this case, the first STA sends a plurality of corresponding uplink access signals by using a plurality of preallocated resource groups, to feed back a corresponding channel status.

The AP and the first STA may agree on the preset condition herein in advance. The preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

Before step 310, to be specific, before the first STA receives the first trigger frame broadcast by the AP, the first STA receives a group identifier that is notified by the AP and that is of a group in which the first STA is located.

After the first STA obtains the group identifier of the group in which the first STA is located, the first STA receives a first trigger frame that is broadcast by the AP and that carries a group identifier.

When the first STA determines that the group identifier carried in the first trigger frame is the same as the group identifier corresponding to the group in which the first STA is located, and that the first STA meets the preset condition, the first STA sends the uplink access signal to the AP by using the resource group allocated by the AP to the first STA.

A manner in which the first STA obtains the resource group allocated by the AP to the first STA includes but is not limited to the following manners.

In a first obtaining manner, to associate with the AP, the first STA obtains at least one resource group allocated by the AP to the first STA.

In a second obtaining manner, to associate with the AP, the first STA obtains an association ID allocated by the AP to the first STA.

The STA and the AP agree on a preset first operation rule, to perform an operation on the association ID, so as to obtain an identifier sequence included in the resource group allocated to the first STA.

Optionally, the STA and the AP agree on a preset second operation rule, to perform an operation on the association ID, so as to obtain a subchannel number included in the resource group allocated to the first STA.

The two operation rules herein may be used separately, or may be used in combination.

In a third obtaining manner, the first STA receives the first trigger frame broadcast by the AP, the first trigger frame carries a STA ID of the first STA and the resource group allocated to the first STA, and the first STA obtains, based on the first trigger frame, the resource group allocated to the first STA.

In a fourth obtaining manner, before receiving the first trigger frame broadcast by the AP, the first STA receives a management frame or a control frame broadcast by the AP, the management frame or the control frame carries a STA ID of the first STA and the resource group allocated to the first STA, and the first STA obtains, based on the management frame or the control frame, the resource group allocated to the first STA.

For the third obtaining manner and the fourth obtaining manner, the first STA needs to obtain a parsing rule of Table 1, Table 2, and Table 3 in advance, and then parses a resource group allocation table of a corresponding type based on specifications, to obtain the resource group allocated by the AP to the first STA.

In a fifth obtaining manner, the first STA receives the first trigger frame broadcast by the AP, and the first trigger frame carries an allocation bitmap.

In a sixth obtaining manner, before receiving the first trigger frame broadcast by the AP, the first STA receives a management frame or a control frame broadcast by the AP, and the management frame or the control frame carries an allocation bitmap.

The allocation bitmap includes N bits and an identity ID of a start STA of a STA to which a resource group is to be allocated, the N bits are respectively corresponding to N different STAs, an ID of a STA corresponding to an i^{th} bit is the identity ID of the start STA plus i minus 1, and when a status of the i^{th} bit is 1, it indicates that a resource group is allocated to the STA corresponding to the i^{th} bit. The allocated resource group is determined in the following manner: calculating a total quantity of 1s from a first bit to the i^{th} bit, and determining, based on a preset correspondence between a total quantity of 1s and a resource group, a resource group corresponding to the total quantity of 1s from the first bit to the i^{th} bit.

In both the fifth obtaining manner and the sixth obtaining manner, the first STA obtains the resource group based on the allocation bitmap. As shown in Table 4, the first STA specifically determines, based on the allocation bitmap, a bit corresponding to the first STA, and when determining that the bit corresponding to the first STA is 1, the first STA calculates a total quantity of 1s from the first bit to the bit corresponding to the first STA, and determines, based on the preset correspondence between a total quantity of 1s and a resource group, a resource group corresponding to the total quantity of 1s from the first bit to the bit corresponding to the first STA.

In a seventh obtaining manner, the first STA receives the first trigger frame broadcast by the AP, the first trigger frame carries LTF duration or a symbol quantity value, and the first STA determines, based on the LTF duration or the symbol quantity value, the resource group allocated by the AP to the first STA.

In an eighth obtaining manner, before receiving the first trigger frame broadcast by the AP, the first STA receives a management frame or a control frame broadcast by the AP, the management frame or the control frame carries LTF duration or a symbol quantity value, and the first STA determines, based on the LTF duration or the symbol quantity value, the resource group allocated by the AP to the first STA.

The station determines the identifier sequence from a corresponding LTF sequence based on the LTF duration or the LTF symbol quantity value.

In addition, after the first STA performs step 320, the first STA receives an acknowledgment frame broadcast by the AP, and the acknowledgment frame includes acknowledgment indication information of all STAs that meets the preset condition.

The first STA acknowledges, based on the acknowledgment frame, that the uplink access signal is successfully sent.

A method used by the first STA to parse the acknowledgment frame and acknowledge that the uplink access signal is successfully sent includes but is not limited to at least the following methods.

In a first method, if the acknowledgment indication information includes IDs of all the STAs that meet the preset condition, the first STA determines that the acknowledgment indication information includes a STA ID of the first STA, and acknowledges that the uplink access signal is successfully sent.

In a second method, if the acknowledgment indication information includes resource group indexes of resource groups used by all the STAs that meet the preset condition, and the first STA determines that the acknowledgment indication message includes a resource group index of a resource group used by the first STA, the first STA acknowledges that the uplink access signal is successfully sent.

In a third method, if the acknowledgment indication information includes an acknowledgment bitmap, the first STA determines a bit, in the acknowledgment bitmap, corresponding to a resource group index of a resource group used by the first STA, and if the first STA determines that a status of the bit is 1, the first STA acknowledges that the uplink access signal is successfully sent.

The acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition.

In a fourth method, if the acknowledgment indication information includes an acknowledgment bitmap, the first STA determines a bit, in the acknowledgment bitmap, corresponding to a STA ID of the first STA, and if the first STA determines that a status of the bit is 1, the first STA acknowledges that the uplink access signal is successfully sent.

The acknowledgment bitmap includes M bits and a start STA ID of a to-be-acknowledged STA, the M bits are respectively corresponding to M different STAs, an ID of a STA corresponding to an i^{th} bit is the start STA ID plus i minus 1, and when a status of the i^{th} bit is 1, it indicates that the STA corresponding to the i^{th} bit meets the preset condition.

In addition, the first STA receives the acknowledgment frame broadcast by the AP, and the acknowledgment frame further carries a new resource group reallocated to the first STA.

In addition, the first STA receives a second trigger frame broadcast by the AP, and the second trigger frame further carries a new resource group reallocated to the first STA.
1: A power saving mode-poll (PS-Poll) application scenario is used as an example.

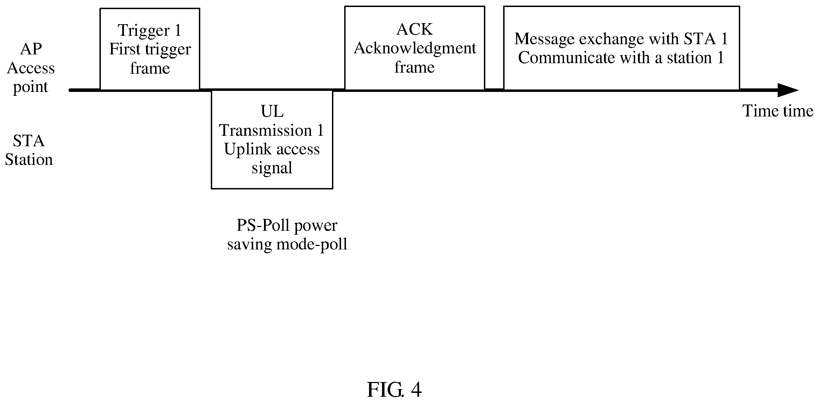

As shown in FIG. 4, the AP broadcasts the first trigger frame, to request uplink access of a STA that switches from a sleep state to a non-sleep state. After a STA 1 switches from a sleep state to a non-sleep (that is, active) state, the STA 1 sends, on a specified subchannel by using an allocated resource group, an uplink access signal that carries an LTF signal generated by an HE-LTF, to notify the AP that the STA 1 has entered a non-sleep state. The AP may determine, in the acknowledgement frame, that the STA 1 has switched from the sleep state to the non-sleep state, and may indicate an uplink or downlink transmission time.

Specifically, before the AP broadcasts the first trigger frame, the AP adds, to a beacon (Beacon) frame, a quantity 5 of STAs to which a resource group needs to be allocated, STA IDs of the five STAs, and a resource group allocated to a STA corresponding to each STA ID, that is, a resource group allocation table, as shown in Table 9.

**Table 9**

| **Quantity of STAs** | **Resource group indexResource group indexResource group indexResource group index** | **STA 1 ID** | **STA 2 ID** | **...** | **STA_N ID** |
|---|---|---|---|---|---|
| 5 | 1 | 1 | 2 | ... | 5 |

It can be learned from the foregoing table that the AP allocates resource groups to five STAs by using the beacon frame. STA IDs are respectively 1, 2, 3, 4, and 5. A resource group index 1 indicates that a resource group whose resource group index is 1 is allocated to a STA whose STA ID is 1, and it can be inferred that a resource group whose resource group index is 2 is allocated to a STA whose STA ID is 2, ..., and a resource group whose resource group index is 5 is allocated to a STA whose STA ID is 5.

Alternatively, before the AP broadcasts the first trigger frame, the AP adds an allocation bitmap to a beacon frame, as shown in Table 10:

**Table 10**

| **Quantity of STAs (optional)** | **Start STA ID** | **Bit (1)** | **Bit (2)** | **Bit (3)** | **Bit (4)** | **Bit (5)** |
|---|---|---|---|---|---|---|
| 5 | 1 | 1 | 0 | 0 | 1 | 1 |

It can be learned from Table 10 that a status of Bit (1) is 1, and it indicates that a resource group whose resource group index is 1 is allocated to a STA whose STA ID is 1; a status of Bit (2) is 0, and it indicates that no resource group is allocated to a STA whose STA ID is 2; and similarly, no resource group is allocated to a STA whose STA ID is 3. A status of Bit (4) is 1, and it indicates that a resource group whose resource group index is 2 is allocated to a STA whose STA ID is 4; and a status of Bit (5) is 1, and it indicates that a resource group whose resource group index is 3 is allocated to a STA whose STA ID is 5.

In addition, it is assumed that each resource group allocation table or each allocation bitmap corresponds to one user group, and the resource group allocation table or the allocation bitmap may further include a target time, to instruct a STA in a corresponding user group to wake up at the target time. In addition, a same resource group may be allocated to user groups corresponding to different resource group allocation tables or allocation bitmaps, and the different resource group allocation tables or allocation bitmaps carry different target times, so as to multiplex the resource group and avoid mixed use of the resource group. In addition, the STA wakes up only at an instructed target time, so that an uplink access signal transmitted by another STA is not received, and power is reduced to a maximum extent.

In addition, the first trigger frame may further indicate a quantity of OFDMA symbols occupied by the identifier sequence, and indicate maximum load duration.

2: A buffer size report (Buffer Size Report) application scenario is used as an example.

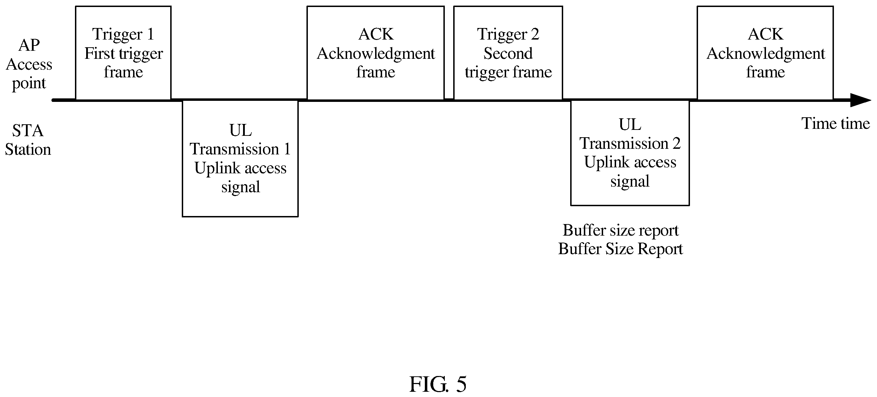

As shown in FIG. 5, when a station has data and needs to perform uplink transmission, the station sends an uplink access signal after the AP sends the first trigger frame. The first trigger frame includes uplink data that needs to be transmitted, to request a station that meets the preset condition to send an uplink access signal in a specified time after receiving the first trigger frame. The AP sends a first acknowledgment frame when determining that the station successfully performs uplink access. Then, the AP sends a second trigger frame, and acknowledges, in the acknowledgment frame, that the station that successfully performs uplink access sends a buffer size report to the AP, and the AP sends a second acknowledgment frame after successfully receiving the buffer size report.

The AP may add, to the acknowledgment frame, a STA ID of each STA that performs successful access, that is, an acknowledgment table, as shown in Table 11.

**Table 11**

| **Quantity of STAs** | **STA 1 ID** | **STA 2 ID** | **STA 3 ID** | **STA_4 ID** |
|---|---|---|---|---|
| 4 | 1 | 3 | 5 | 6 |

It can be learned from Table 11 that uplink access of stations whose STA IDs are 1, 3, 5, and 6 succeeds.

Alternatively, the AP adds an acknowledgment bitmap to the acknowledgment frame, as shown in Table 12.

**Table 12**

| **Quantity of STAs** | **Start STA ID** | **Bit (1)** | **Bit (2)** | **Bit (3)** | **Bit (4)** | **Bit (5)** | **Bit (6)** |
|---|---|---|---|---|---|---|---|
| 4 | 1 | 1 | 0 | 1 | 0 | 1 | 1 |

It can be learned from Table 12 that, if uplink access of a station corresponding to a bit whose status is 1 succeeds, it can be learned that uplink access of stations whose STA IDs are 1, 3, 5, and 6 succeeds.

3: A bandwidth indication (BW Indication) application scenario is used as an example.

In the prior art, when an AP polls an available channel status of a station, if a channel that feeds back a channel status and that is allocated to the station indicates that a channel status is busy, and another channel is idle, the station cannot feed back an idle-channel report, and the AP cannot serve the station.

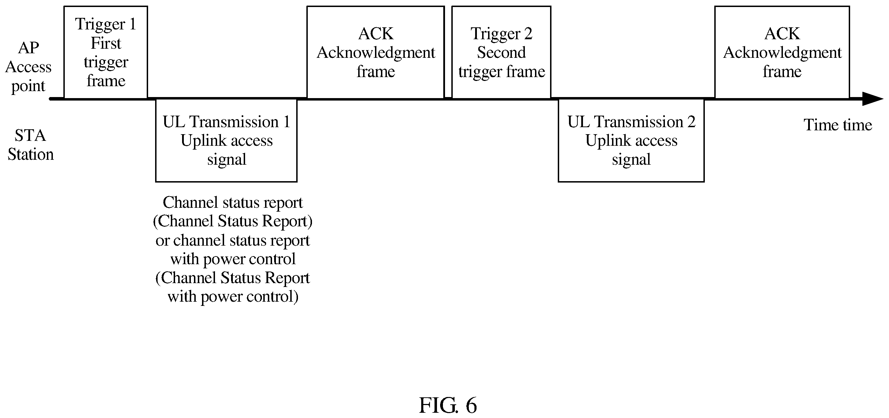

As shown in FIG. 6, the AP may allocate n resource groups to a STA 1. The n resource groups herein are respectively corresponding to n different subchannels. The STA 1 may choose to separately send uplink access signals on the subchannels corresponding to the n resource groups. When the AP broadcasts the first trigger frame, the first trigger frame is used to request a station whose channel status is available to send an uplink access signal in the specified time after receiving the first trigger frame. If the AP receives k uplink access signals sent by the STA 1, the k uplink access signals may indicate that corresponding k subchannels are available. The n uplink access signals include no load part, transmission duration at an uplink layer protocol data unit (Presentation protocol data unit, PPDU) is relatively short, and relatively small interference is caused to existing transmission on a busy channel. Therefore, the STA 1 may ignore a fact that the channel is busy, can perform sending on the busy channel, and reports that a channel status of the channel is busy.

In addition, after receiving the first trigger frame, the station may adjust uplink transmit power based on an interference status of a subchannel that needs to be used in uplink transmission. When the station determines that the subchannel that needs to be used in uplink transmission is busy, the station may decrease the uplink transmit power. The uplink access signal has a sequence gain or a code division gain, to improve signal monitoring reliability, the AP may indicate a relatively long uplink access signal time in the first trigger frame, to be specific, the signal occupies a relatively large quantity of symbols, and uses a longer sequence. Therefore, the station sends, based on the uplink access signal time, an uplink access signal corresponding to a relatively long time. Alternatively, the AP may indicate, in the first trigger frame, a quantity of times that the uplink access signal is repeated, and the station may send, according to the indication, the quantity of times that the uplink access signal is repeated. Therefore, in the foregoing two methods, the sequence gain or the code division gain of the uplink access signal is improved, so that the AP can successfully detect the uplink access signal.

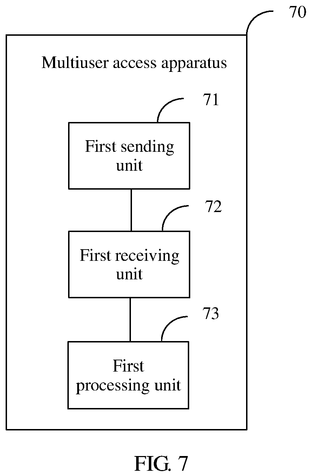

FIG. 7 provides a multiuser access apparatus 70, including:
a first sending unit 71, configured to broadcast a first trigger frame to a station STA within coverage of the apparatus, where the first trigger frame carries a preset condition, to request a STA that meets the preset condition to send an uplink access signal in a specified time after receiving the first trigger frame;
a first receiving unit 72, configured to receive an uplink access signal sent by at least one STA, where the uplink access signal includes an identifier sequence; and
a first processing unit 73, configured to: when it is determined that an identifier sequence included in a received uplink access signal is the same as an identifier sequence included in a resource group allocated to a STA that sends the uplink access signal, determine that the STA that sends the uplink access signal meets the preset condition.

Optionally, when it is determined that the identifier sequence included in the received uplink access signal is the same as the identifier sequence included in the resource group allocated by the AP to the STA that sends the uplink access signal, the first processing unit 73 is specifically configured to:
determine that the received uplink access signal includes an LTF signal generated by a long training field LTF sequence or an LTF signal generated by an LTF that is repeated for a preset quantity of times; and
determine that an LTF used for the LTF signal included in the uplink access signal is the same as an LTF included in the resource group allocated to the STA that sends the uplink access signal.

Optionally, the first processing unit 73 is further configured to: before determining that the STA that sends the uplink access signal meets the preset condition, determine that a subchannel used for receiving the uplink access signal is the same as a subchannel included in the resource group allocated to the STA that sends the uplink access signal.

Optionally, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

Optionally, the first processing unit 73 is further configured to: when allocating the resource group to the STA, allocate an association ID to the STA, to associate with the STA; and
agree with the STA on a preset first operation rule, to perform an operation on the allocated association ID, so as to obtain the identifier sequence included in the resource group allocated to the STA.

Optionally, the first processing unit 73 is further configured to: after allocating the association ID to the STA, agree with the STA on a preset second operation rule, to perform an operation on the allocated association ID, so as to obtain a subchannel included in the resource group allocated to the STA.

Optionally, the first sending unit 71 is further configured to: add an allocation bitmap to the broadcast first trigger frame, or broadcast a management frame or a control frame before the AP broadcasts the first trigger frame, where the management frame or the control frame carries an allocation bitmap.

The allocation bitmap includes N bits and a STA ID of a start STA of a STA to which a resource group is to be allocated, the N bits are respectively corresponding to N different STAs, a STA ID of a STA corresponding to an i^{th} bit is the STA ID of the start STA plus i minus 1, and when a status of the i^{th} bit is 1, it indicates that a resource group is allocated to the STA corresponding to the i^{th} bit. The allocated resource group is determined in the following manner: calculating a total quantity of 1s from a first bit to the i^{th} bit, and determining, based on a preset correspondence between a total quantity of 1s and a resource group, a resource group corresponding to the total quantity of 1s from the first bit to the i^{th} bit.

Optionally, when determining the LTF used for the LTF signal included in the received uplink access signal, the first processing unit 73 is specifically configured to:
perform channel estimation on a subchannel used for receiving the uplink access signal, to obtain a power value of the uplink access signal;
if it is determined that the power value is greater than a preset threshold, determine that the uplink access signal received by using the subchannel includes the LTF signal generated by the LTF; and
detect each LTF in a preset LTF set, and determine the LTF used to generate the LTF signal in the uplink access signal.

The preset threshold is determined by noise power measured before the AP receives the uplink access signal sent by the at least one STA or is determined by a sum of the noise power and interference power, or is determined by noise power obtained by the AP based on a preset resource group or is determined by a sum of the noise power and interference power.

Optionally, the first sending unit 71 is further configured to broadcast an acknowledgment frame after determining that the STA that sends the uplink access signal meets the preset condition, and the acknowledgment frame includes acknowledgment indication information of all STAs that meet the preset condition.

The acknowledgment indication information includes at least one of the following cases:
IDs of all the STAs that meet the preset condition, or
resource group indexes of resource groups separately used by all the STAs that meet the preset condition.

Optionally, the acknowledgment indication information further includes an acknowledgment bitmap.

The acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition.

Alternatively, the acknowledgment bitmap includes M bits and a STA ID of a start STA of a to-be-acknowledged STA, the M bits are respectively corresponding to M different STAs, an ID of a STA corresponding to an i^{th} bit is the STA ID of the start STA plus i minus 1, and when a status of the i^{th} bit is 1, it indicates that the STA corresponding to the i^{th} bit meets the preset condition.

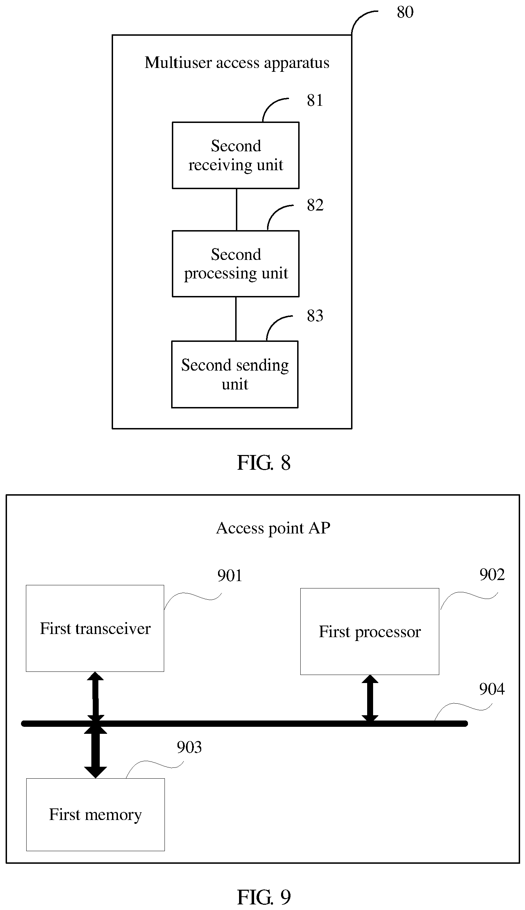

FIG. 8 provides a multiuser access apparatus 80, including:
a second receiving unit 81, configured to receive a first trigger frame broadcast by an AP, where the first trigger frame carries a preset condition, to request a STA that meets the preset condition to send an uplink access signal in a specified time after receiving the first trigger frame;
a second processing unit 82, configured to determine that the apparatus meets the preset condition; and
a second sending unit 83, configured to send an uplink access signal to the AP by using a resource group allocated by the AP to the apparatus, where the uplink access signal includes an identifier sequence.

Optionally, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

Optionally, the second processing unit 82 is further configured to: obtain the resource group allocated by the AP to the apparatus, and obtain an association ID allocated by the AP to the apparatus, to associate with the AP; and
agree with the AP on a preset first operation rule, to perform an operation on the association ID, so as to obtain an identifier sequence included in the resource group allocated to the apparatus.

Optionally, the second processing unit 82 is further configured to: after obtaining the association ID allocated by the AP to the apparatus, agreeing with the AP on a preset second operation rule, to perform an operation on the association ID, so as to obtain a subchannel included in the resource group allocated to the apparatus.

Optionally, the second receiving unit 81 is further configured to:
receive the first trigger frame broadcast by the AP, where the first trigger frame carries an allocation bitmap, or before the first STA receives the first trigger frame broadcast by the AP, receive a management frame or a control frame broadcast by the AP, where the management frame or the control frame carries an allocation bitmap.

The second processing unit 82 is further configured to: determine, based on the allocation bitmap, a bit corresponding to the apparatus; and
when determining that the bit corresponding to the apparatus is 1, calculate a total quantity of 1s from a first bit to the bit corresponding to the apparatus, and determine, based on a preset correspondence between a total quantity of 1s and a resource group, a resource group corresponding to the total quantity of 1s from the first bit to the bit corresponding to the apparatus.

The allocation bitmap includes N bits and a STA ID of a start STA of a STA to which a resource group is to be allocated, the N bits are respectively corresponding to N different STAs, an ID of a STA corresponding to an i^{th} bit is the identity ID of the start STA plus i minus 1, and when a status of the i^{th} bit is 1, it indicates that a resource group is allocated to the STA corresponding to the i^{th} bit. The allocated resource group is determined in the following manner: calculating a total quantity of 1s from the first bit to the i^{th} bit, and determining, based on the preset correspondence between a total quantity of 1s and a resource group, a resource group corresponding to the total quantity of 1s from the first bit to the i^{th} bit.

Optionally, the second receiving unit 81 is further configured to: after sending the uplink access signal to the AP, receive an acknowledgment frame broadcast by the AP, where the acknowledgment frame includes acknowledgment indication information of all STAs that meet the preset condition.

The second processing unit 82 is further configured to acknowledge, based on the acknowledgment frame, that the uplink access signal is successfully sent.

Optionally, when acknowledging, based on the acknowledgment frame, that the uplink access signal is successfully sent, the second processing unit 82 is specifically configured to:
if the acknowledgment indication information includes IDs of all the STAs that meet the preset condition, and it is determined that the acknowledgment indication information includes a STA ID of the apparatus, acknowledge that the uplink access signal is successfully sent; and/or
if the acknowledgment indication information includes resource group indexes of resource groups used by all the STAs that meet the preset condition, and it is determined that the acknowledgment indication message includes a resource group index of a resource group used by the first STA, acknowledge that the uplink access signal is successfully sent.

Optionally, when acknowledging, based on the acknowledgment frame, that the uplink access signal is successfully sent, the second processing unit 82 is specifically configured to:
if the acknowledgment indication information includes an acknowledgment bitmap, determine a bit, in the acknowledgment bitmap, corresponding to a resource group index of a resource group used by the apparatus, and if it is determined that a status of the bit is 1, acknowledge that the uplink access signal is successfully sent; or
if the acknowledgment indication information includes an acknowledgment bitmap, determine a bit, in the acknowledgment bitmap, corresponding to a STA ID of the apparatus, and if it is determined that a status of the bit is 1, acknowledge that the uplink access signal is successfully sent.

The acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition; or
the acknowledgment bitmap includes M bits and a start STA ID of a to-be-acknowledged STA, the M bits are respectively corresponding to M different STAs, an ID of a STA corresponding to an i^{th} bit is the start STA ID plus i minus 1, and when a status of the i^{th} bit is 1, it indicates that the STA corresponding to the i^{th} bit meets the preset condition.

It should be noted that division of modules in the embodiments of the present invention is an example, and is merely logical function division. There may be another division manner in actual implementation. In addition, functional modules in the embodiments of this application may be integrated into one processing module, or each module may exist alone physically, or two or more modules are integrated into one module. The integrated module may be implemented in a form of hardware, or may be implemented in a form of a software function module.

When the integrated module is implemented in the form of a software functional module and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

FIG. 9 provides an access point AP, including:
a first transceiver 901, a first processor 902, and a first memory 903. The first transceiver 901, the first processor 902, and the first memory 903 are connected to each other. A specific medium for connecting the foregoing parts is not limited. In FIG. 9, the first memory 903, the first processor 902, and the first transceiver 901 are connected by using a bus 904, and the bus is represented by a bold line in FIG. 9. A connection manner between other parts is merely an example for description, and imposes no limitation. The bus may be classified into an address bus, a data bus, a control bus, and the like. For ease of representation, only one bold line is used in FIG. 9 for representation, but it does not indicate that there is only one bus or one type of bus.

The first memory 903 is configured to store program code executed by the first processor 902, and may be a volatile first memory (English: volatile memory) such as a first random access memory (English: random access memory, RAM for short). The first memory 903 may be a first non-volatile memory (English: non-volatile memory) such as a first read-only memory (English: read-only memory, ROM for short), a first flash memory (English: flash memory), a hard disk drive (English: hard disk drive, HDD for short), or a solid-state drive (English: solid-state drive, SSD for short). Alternatively, the first memory 903 is any other medium that can be used to carry or store expected program code in a command or data structure form and that can be accessed by a computer. However, this is not limited thereto. The first memory 903 may be a combination of the first memories.

The first transceiver 901 is configured to: broadcast a first trigger frame to a station STA within coverage of the apparatus, where the first trigger frame carries a preset condition, to request a STA that meets the preset condition to send an uplink access signal in a specified time after receiving the first trigger frame; and
receive an uplink access signal sent by at least one STA, where the uplink access signal includes an identifier sequence.

The first processor 902 is configured to: when determining that an identifier sequence included in a received uplink access signal is the same as an identifier sequence included in a resource group allocated to a STA that sends the uplink access signal, determine that the STA that sends the uplink access signal meets the preset condition.

Optionally, when determining that the identifier sequence included in the received uplink access signal is the same as the identifier sequence included in the resource group allocated by the AP to the STA that sends the uplink access signal, the first processor 902 is specifically configured to:
determine that the received uplink access signal includes an LTF signal generated by a long training field LTF sequence or an LTF signal generated by an LTF that is repeated for a preset quantity of times; and
determine that an LTF used for the LTF signal included in the uplink access signal is the same as an LTF included in the resource group allocated to the STA that sends the uplink access signal.

Optionally, the first processor 902 is further configured to: before determining that the STA that sends the uplink access signal meets the preset condition, determine that a subchannel used for receiving the uplink access signal is the same as a subchannel included in the resource group allocated to the STA that sends the uplink access signal.

Optionally, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

Optionally, the first processor 902 is further configured to: when allocating the resource group to the STA, allocate an association ID to the STA, to associate with the STA; and
agree with the STA on a preset first operation rule, to perform an operation on the allocated association ID, so as to obtain the identifier sequence included in the resource group allocated to the STA.

Optionally, the first processor 902 is further configured to: after allocating the association ID to the STA, agree with the STA on a preset second operation rule, to perform an operation on the allocated association ID, so as to obtain a subchannel included in the resource group allocated to the STA.

Optionally, the first transceiver 901 is further configured to: add an allocation bitmap to the broadcast first trigger frame, or broadcast a management frame or a control frame before the AP broadcasts the first trigger frame, where the management frame or the control frame carries an allocation bitmap.

The allocation bitmap includes N bits and a STA ID of a start STA of a STA to which a resource group is to be allocated, the N bits are respectively corresponding to N different STAs, a STA ID of a STA corresponding to an i^{th} bit is the STA ID of the start STA plus i minus 1, and when a status of the i^{th} bit is 1, it indicates that a resource group is allocated to the STA corresponding to the i^{th} bit. The allocated resource group is determined in the following manner: calculating a total quantity of 1s from a first bit to the i^{th} bit, and determining, based on a preset correspondence between a total quantity of 1s and a resource group, a resource group corresponding to the total quantity of 1s from the first bit to the i^{th} bit.

Optionally, when determining the LTF used for the LTF signal included in the received uplink access signal, the first processor 902 is specifically configured to:
perform channel estimation on a subchannel used for receiving the uplink access signal, to obtain a power value of the uplink access signal;
if it is determined that the power value is greater than a preset threshold, determine that the uplink access signal received by using the subchannel includes the LTF signal generated by the LTF; and
detect each LTF in a preset LTF set, and determine the LTF used to generate the LTF signal in the uplink access signal.

The preset threshold is determined by noise power measured before the AP receives the uplink access signal sent by the at least one STA or is determined by a sum of the noise power and interference power, or is determined by noise power obtained by the AP based on a preset resource group or is determined by a sum of the noise power and interference power.

Optionally, the first transceiver 901 is further configured to broadcast an acknowledgment frame after determining that the STA that sends the uplink access signal meets the preset condition, and the acknowledgment frame includes acknowledgment indication information of all STAs that meet the preset condition.

The acknowledgment indication information includes at least one of the following cases:
IDs of all the STAs that meet the preset condition, or
resource group indexes of resource groups separately used by all the STAs that meet the preset condition.

Optionally, the acknowledgment indication information further includes an acknowledgment bitmap.

The acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition.

Alternatively, the acknowledgment bitmap includes M bits and a STA ID of a start STA of a to-be-acknowledged STA, the M bits are respectively corresponding to M different STAs, an ID of a STA corresponding to an i^{th} bit is the STA ID of the start STA plus i minus 1, and when a status of the i^{th} bit is 1, it indicates that the STA corresponding to the i^{th} bit meets the preset condition.

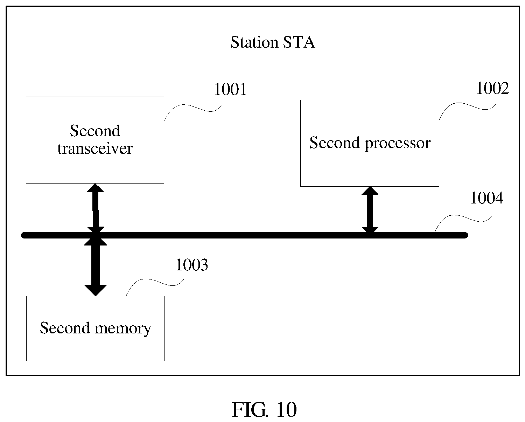

FIG. 10 provides a station STA, including:
a second transceiver 1001, a second processor 1002, and a second memory 1003. The second transceiver 1001, the second processor 1002, and the second memory 1003 are connected to each other. A specific medium for connecting the foregoing parts is not limited. In FIG. 10, the second memory 1003, the second processor 1002, and the second transceiver 1001 are connected by using a bus 1004, and the bus is represented by a bold line in FIG. 10. A connection manner between other parts is merely an example for description, and imposes no limitation. The bus may be classified into an address bus, a data bus, a control bus, and the like. For ease of representation, only one bold line is used in FIG. 10 for representation, but it does not indicate that there is only one bus or one type of bus.

The second memory 1003 is configured to store program code executed by the second processor 1002, and may be a second volatile memory (English: volatile memory) such as a second random access memory (English: random access memory, RAM for short). The second memory 1003 may be a second non-volatile memory (English: non-volatile memory) such as a second read-only memory (English: read-only memory, ROM for short), a second flash memory (English: flash memory), a hard disk drive (English: hard disk drive, HDD for short), or a solid-state drive (English: solid-state drive, SSD for short). Alternatively, the second memory 1003 is any other medium that can be used to carry or store expected program code in a command or data structure form and that can be accessed by a computer. However, this is not limited thereto. The second memory 1003 may be a combination of the second memories.

The second transceiver 1001 is configured to receive a first trigger frame broadcast by an AP, where the first trigger frame carries a preset condition, to request a STA that meets the preset condition to send an uplink access signal in a specified time after receiving the first trigger frame.

The second processor 1002 is configured to determine that the STA meets the preset condition.

The second transceiver 1001 is configured to send an uplink access signal to the AP by using a resource group allocated by the AP to the STA, where the uplink access signal includes an identifier sequence.

Optionally, the preset condition is: a sleep state is switched to a non-sleep state, or the AP needs to be triggered to perform downlink transmission, or uplink data needs to be transmitted, or a buffer size used for uplink sending exceeds a specified threshold, or data with a high priority needs to be transmitted, or data of a specific service type and/or data of a specific access type need/needs to be transmitted, or a specific channel status is available or unavailable.

Optionally, the second processor 1002 is further configured to: obtain the resource group allocated by the AP to the STA, and obtain an association ID allocated by the AP to the STA, to associate with the AP; and
agree with the AP on a preset first operation rule, to perform an operation on the association ID, so as to obtain an identifier sequence included in the resource group allocated to the apparatus.

Optionally, the second processor 1002 is further configured to: after obtaining the association ID allocated by the AP to the STA, agree with the AP on a preset second operation rule, to perform an operation on the association ID, so as to obtain a subchannel included in the resource group allocated to the apparatus.

Optionally, the second transceiver 1001 is further configured to:
receive the first trigger frame broadcast by the AP, where the first trigger frame carries an allocation bitmap, or before the first STA receives the first trigger frame broadcast by the AP, receive a management frame or a control frame broadcast by the AP, where the management frame or the control frame carries an allocation bitmap.

The second processor 1002 is further configured to: determine, based on the allocation bitmap, a bit corresponding to the STA; and
when determining that the bit corresponding to the STA is 1, calculate a total quantity of 1s from a first bit to the bit corresponding to the STA, and determine, based on a preset correspondence between a total quantity of 1s and a resource group, a resource group corresponding to the total quantity of 1s from the first bit to the bit corresponding to the STA.

The allocation bitmap includes N bits and a STA ID of a start STA of a STA to which a resource group is to be allocated, the N bits are respectively corresponding to N different STAs, an ID of a STA corresponding to an i^{th} bit is the identity ID of the start STA plus i minus 1, and when a status of the i^{th} bit is 1, it indicates that a resource group is allocated to the STA corresponding to the i^{th} bit. The allocated resource group is determined in the following manner: calculating a total quantity of 1s from the first bit to the i^{th} bit, and determining, based on the preset correspondence between a total quantity of 1s and a resource group, a resource group corresponding to the total quantity of 1s from the first bit to the i^{th} bit.

Optionally, the second transceiver 1001 is further configured to: after sending the uplink access signal to the AP, receive an acknowledgment frame broadcast by the AP, where the acknowledgment frame includes acknowledgment indication information of all STAs that meet the preset condition.

The second processor 1002 is further configured to acknowledge, based on the acknowledgment frame, that the uplink access signal is successfully sent.

Optionally, when acknowledging, based on the acknowledgment frame, that the uplink access signal is successfully sent, the second processor 1002 is specifically configured to:
if the acknowledgment indication information includes IDs of all the STAs that meet the preset condition, and it is determined that the acknowledgment indication information includes a STA ID of the STA, acknowledge that the uplink access signal is successfully sent; and/or
if the acknowledgment indication information includes resource group indexes of resource groups used by all the STAs that meet the preset condition, and it is determined that the acknowledgment indication message includes a resource group index of a resource group used by the first STA, acknowledge that the uplink access signal is successfully sent.

Optionally, when acknowledging, based on the acknowledgment frame, that the uplink access signal is successfully sent, the second processor 1002 is specifically configured to:
if the acknowledgment indication information includes an acknowledgment bitmap, determine a bit, in the acknowledgment bitmap, corresponding to a resource group index of a resource group used by the STA, and if it is determined that a status of the bit is 1, acknowledge that the uplink access signal is successfully sent; or
if the acknowledgment indication information includes an acknowledgment bitmap, determine a bit, in the acknowledgment bitmap, corresponding to a STA ID of the STA, and if it is determined that a status of the bit is 1, acknowledge that the uplink access signal is successfully sent.

The acknowledgment bitmap includes a start resource group index and T bits, the T bits are respectively corresponding to T different resource group indexes, a resource group index corresponding to a j^{th} bit is the start resource group index plus j minus 1, and when a status of the j^{th} bit is 1, it indicates that a STA that uses a resource group with the resource group index corresponding to the j^{th} bit meets the preset condition; or
the acknowledgment bitmap includes M bits and a start STA ID of a to-be-acknowledged STA, the M bits are respectively corresponding to M different STAs, an ID of a STA corresponding to an i^{th} bit is the start STA ID plus i minus 1, and when a status of the i^{th} bit is 1, it indicates that the STA corresponding to the i^{th} bit meets the preset condition.

In conclusion, the AP broadcasts the first trigger frame to the STA within the coverage of the AP, and the first trigger frame carries the preset condition, to request the STA that meets the preset condition to send the uplink access signal in the specified time after receiving the first trigger frame. The AP receives the uplink access signal sent by the at least one STA, the uplink access signal includes the identifier sequence, and when determining that the identifier sequence included in the received uplink access signal is the same as the identifier sequence included in the resource group allocated by the AP to the STA that sends the uplink access signal, the AP determines that the STA that sends the uplink access signal meets the preset condition. The AP allocates a resource group to the STA in advance, the AP broadcasts a trigger frame that carries the preset condition, and when the AP determines that the STA sends an uplink access signal by using an identifier sequence in the resource group allocated in advance, the AP can identify the STA and determine that the STA meets the preset condition. Therefore, uplink resource use efficiency is effectively improved. In addition, this further provides a method for allocating a plurality of resource groups and an access acknowledgment method, so that signaling overheads can be effectively reduced, and resource multiplexing is improved.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a first processor of any other programmable data processing device to generate a machine, so that the instructions executed by a computer or a first processor of any other programmable data processing device generate an apparatus for implementing a specific function specified in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, the invention is defined by the claims.

## Claims

1. A wireless communication method, comprising:
allocating, by an access point, AP, a resource group corresponding to a resource group index to a station, STA, wherein the resource group comprises an identifier sequence;
broadcasting (210), by the AP, a trigger frame, wherein the trigger frame carries a preset condition to request a STA that meets the preset condition to send an uplink access signal in a specified time after receiving the trigger frame,
wherein the trigger frame further comprises a resource group allocation table comprising a quantity of stations, STAs, a start STA identifier, STA ID, and a resource group index s allocated to the start STA, wherein resource groups are allocated to a STA corresponding to the start STA ID to a STA corresponding to the start STA ID+N-1, wherein a resource group index allocated to a STA corresponding to the start STA ID+1 is s+1, and a resource group index allocated to the STA corresponding to the start STA ID+N-1 is s+N-1;
receiving (220), by the AP, an uplink access signal from at least one STA, wherein the uplink access signal includes an identifier sequence;
determining (230), by the AP that the STA that sends the uplink access signal meets the preset condition when the identifier sequence included in a received uplink access signal is the same as an identifier sequence included in a resource group allocated by the AP to a STA.

2. The method according to the claim 1, wherein a resource group corresponding to one resource group index is a combination of a long training field LTF sequence and a subchannel, the ID of the STA is a association ID, AID; wherein the AID of the STA maps the combination of the LTF sequence and the subchannel in a one-to-one manner based on a preset algorithm, and the AP agrees with the STA on a preset first operation rule, to perform an operation on the allocated association ID, so as to obtain the identifier sequence included in the resource group allocated to the STA.

3. The method according to the claim 1 or 2, wherein the preset condition comprises that the STA is in a non-sleep state, or an uplink buffer size of the STA exceeds a threshold.

4. The method according to the claim 2 or 3,
wherein the method further comprises:
agreeing, by the AP with the STA on a preset second operation rule, to perform an operation on the allocated association ID, so as to obtain the subchannel included in the resource group allocated to the STA.

5. A wireless communication method, comprising:
receiving (310), by a station, STA, a trigger frame, wherein the trigger frame carries a preset condition to request a STA that meets the preset condition to send an uplink access signal in a specified time after receiving the trigger frame, wherein the trigger frame further comprises a resource group allocation table comprising a quantity of stations, STAs, a start STA identifier, STA-ID, and a resource group index s allocated to the start STA, wherein resource groups are allocated to a STA corresponding to the start STA ID to a STA corresponding to the start STA ID+N-1, wherein a resource group index allocated to a STA corresponding to the start STA ID+1 is s+1, and a resource group index allocated to the STA corresponding to the start STA ID+N-1 is s+N-1;
sending (320), by the STA, when determining that the preset condition is met, an uplink access signal to an AP by using a resource group allocated to the STA, where the uplink access signal includes an identifier sequence.

6. The method according to the claim 5, wherein
a resource group corresponding to one resource group index is a combination of a long training field LTF sequence and a subchannel, the ID of the STA is a association ID, AID; wherein the AID of the STA maps the combination of the LTF sequence and the subchannel in a one-to-one manner based on a preset algorithm, and the AP agrees with the STA on a preset first operation rule, to perform an operation on the allocated association ID, so as to obtain the identifier sequence included in the resource group allocated to the STA.

7. The method according to the claim 5 or 6, wherein the preset condition comprises that the STA is in a non-sleep state, or an uplink buffer size of the STA exceeds a threshold.

8. A communication apparatus, comprising modules configured for executing the method according to any of claims 1 to 4.

9. A communication apparatus, comprising modules configured for executing the method according to any of claims 5 to 7.

## Patentansprüche

1. Drahtloskommunikationsverfahren, umfassend:
Zuweisen einer Ressourcengruppe, die einem Ressourcengruppenindex entspricht, an eine Station, STA, durch einen Zugriffspunkt, AP, wobei die Ressourcengruppe eine Identifikatorsequenz umfasst;
Ausstrahlen (210), durch den AP, eines Trigger-Frames, wobei der Trigger-Frame eine voreingestellte Bedingung trägt, um eine STA, die die voreingestellte Bedingung erfüllt, aufzufordern, ein Uplink-Zugriffssignal in einer vorgegebenen Zeit nach Empfangen des Trigger-Frames zu senden,
wobei der Trigger-Frame ferner eine Ressourcengruppen-Zuweisungstabelle umfasst, die eine Anzahl von Stationen, STAs, einen Start-STA-Identifikator, eine STA-ID und einen der Start-STA zugewiesenen Ressourcengruppen-Index s umfasst,
wobei Ressourcengruppen einer STA, die der Start-STA-ID entspricht, einer STA, die der Start-STA-ID+N-1 entspricht, zugewiesen werden, wobei ein Ressourcengruppenindex, der einer STA, die der Start-STA-ID+1 entspricht, zugewiesen wird, s+1 ist, und ein Ressourcengruppenindex, der der STA, die der Start-STA-ID+N-1 entspricht, zugewiesen wird, s+N-1 ist;
Empfangen (220) eines Uplink-Zugriffssignals von mindestens einem STA durch den AP, wobei das Uplink-Zugriffssignal eine Identifikator-Sequenz beinhaltet;
Bestimmen (230) durch den AP, dass die STA, die das Uplink-Zugriffssignal sendet, die voreingestellte Bedingung erfüllt, wenn die Identifikator-Sequenz, die in einem empfangenen Uplink-Zugriffssignal enthalten ist, die gleiche ist wie eine Identifikator-Sequenz, die in einer Ressourcengruppe enthalten ist, die von dem AP einer STA zugewiesen wurde.

2. Verfahren nach Anspruch 1, wobei eine Ressourcengruppe, die einem Ressourcengruppenindex entspricht, eine Kombination aus einer langen Trainingsfeld-LTF-Sequenz und einem Unterkanal ist, der ID der STA ein Zuordnungsidentifikator, AID, ist; wobei der AID der STA die Kombination aus der LTF-Sequenz und dem Unterkanal basierend auf einem voreingestellten Algorithmus eins-zu-eins mappt und der AP mit der STA eine voreingestellte erste Operationsregel vereinbart, um eine Operation an dem zugeordneten Zuordnungsidentifikator durchzuführen, um die Identifikatorsequenz zu erhalten, die in der der STA zugewiesenen Ressourcengruppe enthalten ist.

3. Verfahren nach Anspruch 1 oder 2, wobei die voreingestellte Bedingung umfasst, dass sich die STA in einem Nicht-Schlafzustand befindet oder eine Uplink-Puffergröße der STA einen Schwellenwert überschreitet.

4. Verfahren nach Anspruch 2 oder 3,
wobei das Verfahren ferner umfasst:
Vereinbaren, durch den AP, mit der STA auf einer voreingestellten zweiten Operationsregel, eine Operation an der zugewiesenen Zuordnungs-ID durchzuführen, um den Subkanal zu erhalten, der in der der STA zugewiesenen Ressourcengruppe enthalten ist.

5. Drahtloskommunikationsverfahren, umfassend:
Empfangen (310) eines Trigger-Frames durch eine Station, STA, wobei der Trigger-Frame eine voreingestellte Bedingung trägt, um eine STA, die die voreingestellte Bedingung erfüllt, aufzufordern, ein Uplink-Zugriffssignal in einer vorgegebenen Zeit nach dem Empfang des Trigger-Frames zu senden, wobei der Trigger-Frame ferner eine Ressourcengruppen-Zuweisungstabelle umfasst, die eine Anzahl von Stationen, STAs, einen Start-STA-Identifikator, eine STA-ID, und einen Ressourcengruppenindex s, der der Start-STA zugewiesen ist, umfasst, wobei Ressourcengruppen einer STA, die der Start-STA-ID entspricht, einer STA, die der Start-STA-ID+N-1 entspricht, zugewiesen werden, wobei ein Ressourcengruppenindex, der einer STA zugewiesen ist, die der Start-STA-ID+1 entspricht, s+1 ist, und ein Ressourcengruppenindex, der der STA zugewiesen ist, die der Start-STA-ID+N-1 entspricht, s+N-1 ist;
Senden (320) eines Uplink-Zugriffssignals an einen AP durch die STA, wenn bestimmt wird, dass die voreingestellte Bedingung erfüllt ist, unter Verwendung einer der STA zugewiesenen Ressourcengruppe, wobei das Uplink-Zugriffssignal eine Identifikator-Sequenz enthält.

6. Verfahren nach Anspruch 5, wobei
eine Ressourcengruppe, die einem Ressourcengruppenindex entspricht, eine Kombination aus einer langen Trainingsfeld-LTF-Sequenz und einem Unterkanal ist, der ID der STA ein Zuordnungsidentifikator, AID, ist; wobei der AID der STA die Kombination aus der LTF-Sequenz und dem Unterkanal basierend auf einem voreingestellten Algorithmus eins-zu-eins mappt und der AP mit der STA eine voreingestellte erste Operationsregel vereinbart, um eine Operation an dem zugeordneten Zuordnungsidentifikator durchzuführen, um die Identifikatorsequenz zu erhalten, die in der der STA zugewiesenen Ressourcengruppe enthalten ist.

7. Verfahren nach Anspruch 5 oder 6, wobei die voreingestellte Bedingung umfasst, dass sich die STA in einem Nicht-Schlafzustand befindet oder eine Uplink-Puffergröße der STA einen Schwellenwert überschreitet.

8. Kommunikationsvorrichtung, umfassend Module, die für das Ausführen des Verfahrens nach einem der Ansprüche 1 bis 4 konfiguriert sind.

9. Kommunikationsvorrichtung, umfassend Module, die für das Ausführen des Verfahrens nach einem der Ansprüche 5 bis 7 konfiguriert sind.

## Revendications

1. Procédé de communication sans fil, comprenant :
l'attribution, par un point d'accès, AP, d'un groupe de ressources correspondant à un indice de groupe de ressources à une station, STA, dans lequel le groupe de ressources comprend une séquence d'identificateurs ;
la diffusion (210), par l'AP, d'une trame de déclenchement, dans lequel la trame de déclenchement transporte une condition prédéfinie pour demander à une STA qui satisfait à la condition prédéfinie d'envoyer un signal d'accès de liaison montante dans un temps spécifié après la réception de la trame de déclenchement,
dans lequel la trame de déclenchement comprend en outre une table d'attribution de groupes de ressources comprenant une quantité de stations, STA, un identificateur de STA, ID STA, de départ, et un indice de groupe de ressources s attribué à la STA de départ, dans lequel des groupes de ressources sont attribués à une STA correspondant à l'ID STA de départ jusqu'à une STA correspondant à l'ID STA de départ+N-1, dans lequel un indice de groupe de ressources attribué à une STA correspondant à l'ID STA de départ+1 est s+1, et un indice de groupe de ressources attribué à la STA correspondant à l'ID STA de départ+N-1 est s+N-1 ;
la réception (220), par l'AP, d'un signal d'accès de liaison montante provenant d'au moins une STA, dans lequel le signal d'accès de liaison montante comprend une séquence d'identificateurs ;
la détermination (230), par l'AP, du fait que la STA qui envoie le signal d'accès de liaison montante satisfait à la condition prédéfinie lorsque la séquence d'identificateurs incluse dans un signal d'accès de liaison montante reçu est identique à une séquence d'identificateurs incluse dans un groupe de ressources attribué par l'AP à une STA.

2. Procédé selon la revendication 1, dans lequel un groupe de ressources correspondant à un indice de groupe de ressources est une combinaison d'une séquence de champ d'apprentissage long, LTF, et d'un sous-canal, l'ID de la STA est un ID d'association, AID ; dans lequel l'AID de la STA mappe la combinaison de la séquence LTF et du sous-canal de manière biunivoque sur la base d'un algorithme prédéfini, et l'AP convient avec la STA d'une première règle d'opération prédéfinie, pour effectuer une opération sur l'ID d'association attribué, de manière à obtenir la séquence d'identificateurs incluse dans le groupe de ressources attribué à la STA.

3. Procédé selon la revendication 1 ou 2, dans lequel la condition prédéfinie comprend que la STA est dans un état de non-veille, ou qu'une taille de tampon de liaison montante de la STA dépasse un seuil.

4. Procédé selon la revendication 2 ou 3,
dans lequel le procédé comprend en outre :
le fait de convenir, par l'AP avec la STA, d'une seconde règle d'opération prédéfinie, pour effectuer une opération sur l'ID d'association attribué, de façon à obtenir le sous-canal inclus dans le groupe de ressources attribué à la STA.

5. Procédé de communication sans fil, comprenant :
la réception (310), par une station, STA, d'une trame de déclenchement, dans lequel la trame de déclenchement transporte une condition prédéfinie pour demander à une STA qui satisfait à la condition prédéfinie d'envoyer un signal d'accès de liaison montante dans un temps spécifié après la réception de la trame de déclenchement, dans lequel la trame de déclenchement comprend en outre une table d'attribution de groupes de ressources comprenant une quantité de stations, STA, un identificateur de STA, ID STA, de départ, et un indice de groupe de ressources s attribué à la STA de départ, dans lequel des groupes de ressources sont attribués à une STA correspondant à l'ID STA de départ jusqu'à une STA correspondant à l'ID STA de départ+N-1, dans lequel un indice de groupe de ressources attribué à une STA correspondant à l'ID STA de départ+1 est s+1, et un indice de groupe de ressources attribué à la STA correspondant à l'ID STA de départ+N-1 est s+N-1 ;
l'envoi (320), par la STA, lorsqu'il est déterminé que la condition prédéfinie est satisfaite, d'un signal d'accès de liaison montante à un AP à l'aide d'un groupe de ressources attribué à la STA, où le signal d'accès de liaison montante comporte une séquence d'identificateurs.

6. Procédé selon la revendication 5, dans lequel
un groupe de ressources correspondant à un indice de groupe de ressources est une combinaison d'une séquence de champ d'apprentissage long, LTF, et d'un sous-canal, l'ID de la STA est un ID d'association, AID ; dans lequel l'AID de la STA mappe la combinaison de la séquence LTF et du sous-canal de manière biunivoque sur la base d'un algorithme prédéfini, et l'AP convient avec la STA d'une première règle d'opération prédéfinie, pour effectuer une opération sur l'ID d'association attribué, de manière à obtenir la séquence d'identificateurs incluse dans le groupe de ressources attribué à la STA.

7. Procédé selon la revendication 5 ou 6, dans lequel la condition prédéfinie comprend que la STA est dans un état de non-veille, ou qu'une taille de tampon de liaison montante de la STA dépasse un seuil.

8. Appareil de communication, comprenant des modules configurés pour exécuter le procédé selon l'une quelconque des revendications 1 à 4.

9. Appareil de communication, comprenant des modules configurés pour exécuter le procédé selon l'une quelconque des revendications 5 à 7.
